# EUROPEAN PATENT APPLICATION

(11) **EP 4 793 811 A1**
(43) Date of publication of application: **19.08.2026**
(21) Application number: 25734181.8
(22) Date of filing: 18.06.2025
(51) Int. Cl.: G06F 21/84, G06F 21/62, G09G 5/10, G06T 5/50, G06T 7/90, G06T 5/20, G06V 30/10, G06F 3/14

(54) **ELECTRONIC DEVICE, METHOD, AND STORAGE MEDIUM FOR ADJUSTING VISIBILITY OF DISPLAY**

(30) Priority: 11.09.2024 KR 20240123814; 07.10.2024 KR 20240135868
(71) Applicant: Samsung Electronics Co., Ltd, Suwon-si, Gyeonggi-do 16677 (KR)
(72) Inventor: PARK, Daekeun, Suwon-si, Gyeonggi-do 16677 (KR); PARK, Keehyon, Suwon-si, Gyeonggi-do 16677 (KR); KIM, Kwangtai, Suwon-si, Gyeonggi-do 16677 (KR); KIM, Seungryeol, Suwon-si, Gyeonggi-do 16677 (KR); SHIN, Sungyoung, Suwon-si, Gyeonggi-do 16677 (KR); UHM, Minsuk, Suwon-si, Gyeonggi-do 16677 (KR); YEOM, Donghyun, Suwon-si, Gyeonggi-do 16677 (KR); LEE, Haechang, Suwon-si, Gyeonggi-do 16677 (KR); LEE, Hunhee, Suwon-si, Gyeonggi-do 16677 (KR); CHU, Sungmin, Suwon-si, Gyeonggi-do 16677 (KR)
(74) Representative: Gulde & Partner
(86) International application number: PCT/KR2025/008430
(87) International publication number: WO 2026/059041

(57) **Abstract**

An electronic device includes at least one processor including processing circuitry. An electronic device includes memory, comprising one or more storage media, storing one or more programs configured to be executed by the at least one processor individually and/or collectively. An electronic device includes a display. The one or more programs includes instructions that cause the electronic device to generate an image to be displayed through the display and concurrently display, through the display, the image and a patterned image, superimposed on the image, for a privacy display mode. The patterned image is translucent for allowing the image being viewable through the patterned image.

## Description

### [Technical Field]

The following descriptions relate to an electronic device, a method, and a storage medium for adjusting visibility of a display.

### [Background Art]

An electronic device may display visual information through a display panel. For example, the visual information may be displayed through pixels in the display panel. For example, each of the pixels may include at least one first sub-pixel emitting light of a first color, at least one second sub-pixel emitting light of a second color, and at least one third sub-pixel emitting light of a third color.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

An electronic device may comprise at least one processor including processing circuitry. The electronic device may comprise memory, comprising one or more storage media, storing one or more programs configured to be executed by the at least one processor individually and/or collectively. The electronic device may comprise a display. The one or more programs may include instructions that cause the electronic device to generate an image to be displayed through the display. The one or more programs may include instructions that cause the electronic device to concurrently display, through the display, the image and a patterned image, superimposed on the image, for a privacy display mode. The patterned image may be translucent for allowing the image being viewable through the patterned image. The patterned image may include first portions each having a first grayscale range including a first grayscale level, and second portions each having a second grayscale range including a second grayscale level. The first portions and the second portions may alternate with each other. A first contrast between the first portions and the second portions of the patterned image when viewed from a position spaced apart from the display by a first distance may be visually highlighted relative to a second contrast between the first portions and the second portions of the patterned image when viewed from a position spaced apart from the display by a second distance shorter than the first distance.

A method performed by an electronic device with a display may comprise generating an image to be displayed through the display. The method may comprise concurrently displaying, through the display, the image and a patterned image, superimposed on the image, for a privacy display mode. The patterned image may be translucent for allowing the image being viewable through the patterned image. The patterned image may include first portions each having a first grayscale range including a first grayscale level, and second portions each having a second grayscale range including a second grayscale level. The first portions and the second portions may alternate with each other. A first contrast between the first portions and the second portions of the patterned image when viewed from a position spaced apart from the display by a first distance may be visually highlighted relative to a second contrast between the first portions and the second portions of the patterned image when viewed from a position spaced apart from the display by a second distance shorter than the first distance.

A non-transitory computer readable storage medium, when individually and/or collectively executed by at least one processor of an electronic device with a display, may store one or more programs including instructions that cause the electronic device to generate an image to be displayed through the display. The non-transitory computer readable storage medium, when individually and/or collectively executed by the at least one processor, may store one or more programs including instructions that cause the electronic device to concurrently display, through the display, the image and a patterned image, superimposed on the image, for a privacy display mode. The patterned image may be translucent for allowing the image being viewable through the patterned image. The patterned image may include first portions each having a first grayscale range including a first grayscale level, and second portions each having a second grayscale range including a second grayscale level. The first portions and the second portions may alternate with each other. A first contrast between the first portions and the second portions of the patterned image when viewed from a position spaced apart from the display by a first distance may be visually highlighted relative to a second contrast between the first portions and the second portions of the patterned image when viewed from a position spaced apart from the display by a second distance shorter than the first distance.

### [Description of the Drawings]

FIGS. 1A and 1B illustrate an example of a method for adjusting visibility of an image displayed on a display area of a display according to a distance from an electronic device.
FIG. 2 is a schematic view of an exemplary electronic device.
FIG. 3 illustrates an example of a chart for visual sensitivity according to a spatial frequency.
FIG. 4 illustrates an example of an operation flow for generating a patterned image and concurrently displaying the generated patterned image and an image, in order to adjust visibility of the image according to a distance from a display.
FIG. 5 illustrates an example of repeating patterns of a patterned image having a color determined based on a color of an image to be displayed.
FIG. 6 illustrates an example of repeating patterns of a patterned image having an intensity determined based on contents within an image to be displayed.
FIG. 7 illustrates an example of repeating patterns of a patterned image having a spacing determined based on a font size of texts in an image to be displayed.
FIG. 8 illustrates an example of a method of generating a patterned image according to distances of users identified through sensing data.
FIG. 9 illustrates an example of changing a viewing angle of a screen displayed on a display panel.
FIG. 10 illustrates an example configuration of a display panel of an electronic device.
FIG. 11 is a cross-sectional view of a display panel according to the example configuration of FIG. 10.
FIG. 12 illustrates another example configuration of a display panel of an electronic device.
FIG. 13 is a cross-sectional view of a display panel according to the example configuration of FIG. 12.
FIG. 14 is a block diagram of an electronic device in a network environment according to various embodiments.
FIG. 15 is a block diagram of a display module according to various embodiments.
FIG. 16 illustrates an example of an exemplary rollable electronic device.
FIGS. 17A and 17B illustrate an example of an exemplary foldable electronic device.
FIG. 18 illustrates an example of an exemplary multi-foldable electronic device.
FIG. 19 is a schematic view of an exemplary artificial intelligence (AI) system.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B).

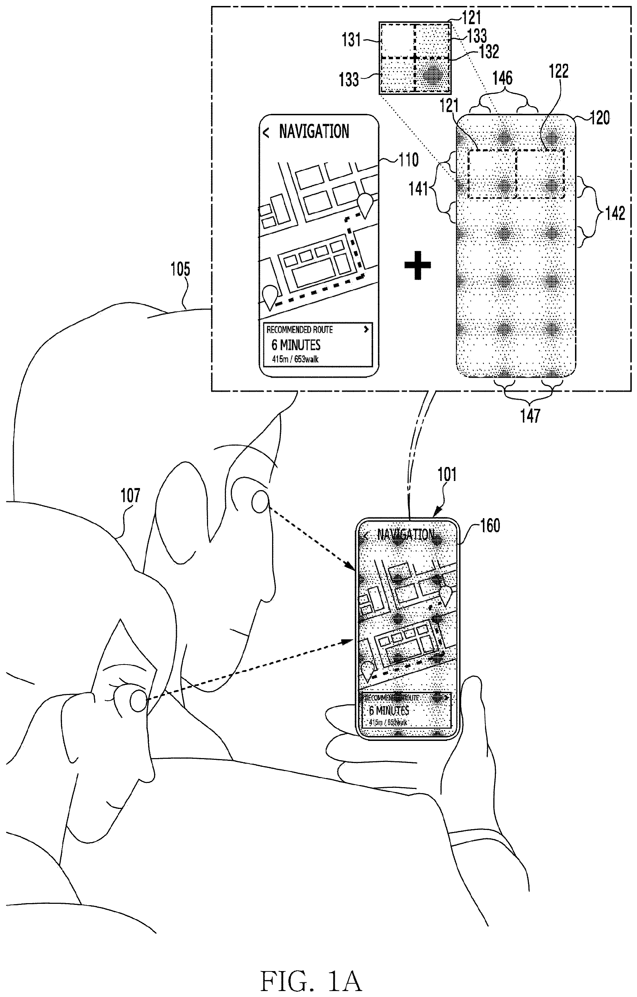

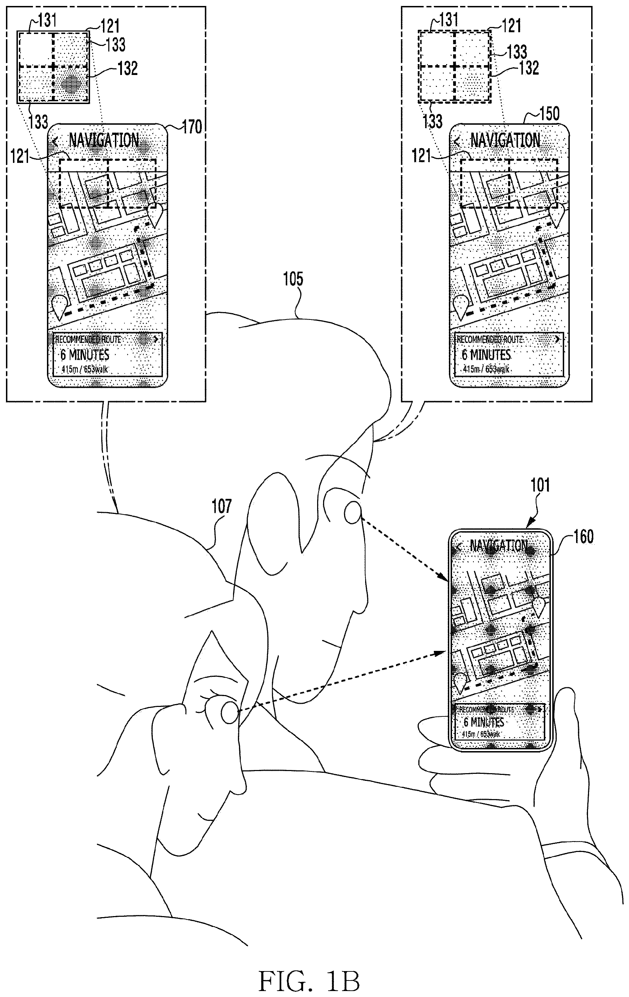

FIGS. 1A and 1B illustrate an example of a method for adjusting visibility of an image displayed on a display area of a display according to a distance from an electronic device.

FIGS. 1A and 1B illustrate examples of a method in which the electronic device 101 adjusts visibility of an image displayed on a display area according to a distance from the electronic device 101 by using a patterned image. The distance from the electronic device 101 may be referred to as a distance from the display, a distance from the display area, or a distance from the image displayed on the display area. The display area of the display may be referred to as a display area of a display panel 160. What is displayed on the display area of the display may be referred to as being displayed via the display.

Referring to FIG. 1A, the electronic device 101 may display an image 110 on the display area of the display panel 160. For example, the electronic device 101 may generate an image 110 and display the generated image 110 on the display area of the display panel 160.

The image 110 displayed on the display area of the display panel 160 may be viewable to a user 105 of the electronic device 101. In this case, the image 110 may also be viewable to a third party (i.e. another person) 107 who is not the user 105 of the electronic device 101. As a non-limiting example, when the image 110 includes personal information of the user 105, the personal information of the user 105 may be exposed to the third party 107 who is not the user 105, against the intention of the user 105. As a non-limiting example, the personal information may include data related to the privacy of the user 105 (e.g., email, message, photo, note), banking information, or password. In other words, as functions of the electronic device 101 become diversified, the personal information may be provided by the electronic device 101, and thus a demand for protecting the privacy of the user 105 may increase.

Accordingly, the present disclosure may adjust visibility by using a patterned image 120 displayed concurrently (or together) with an image 110 displayed on the electronic device 101, so that contents within the image 110 are viewable to the user 105, and the contents within the image 110 are not viewable to the third party 107. The patterned image 120 may be referred to as a pattern, a readability-degradation pattern, a patterned image, a masking image, a blending image, a periodic image, or a sub-image. In relation to the patterned image 120, the image 110 may be referred to as a main image or a contents image.

The electronic device 101 may generate a patterned image 120. Although not shown in FIG. 1A, the patterned image 120 may be superimposed on the image 110. For example, when the patterned image 120 and the image 110 are concurrently displayed, the patterned image 120 may be superimposed on the image 110. For example, the electronic device 101 may concurrently display the patterned image 120 and the image 110 by blending the patterned image 120 and the image 110. As a non-limiting example, the electronic device 101 may perform the blending of the patterned image 120 and the image 110, and may also generate a blended image of the patterned image 120 and the image 120 based on the blending.

The patterned image 120 may allow the image 110 to be viewable through the patterned image 120. As a non-limiting example, the patterned image 120 may be a translucent image. For example, the translucent patterned image 120 may be superimposed on the image 110 and displayed together with the image 110, thereby allowing the image 110 to be viewable to the user 105 through the patterned image 120.

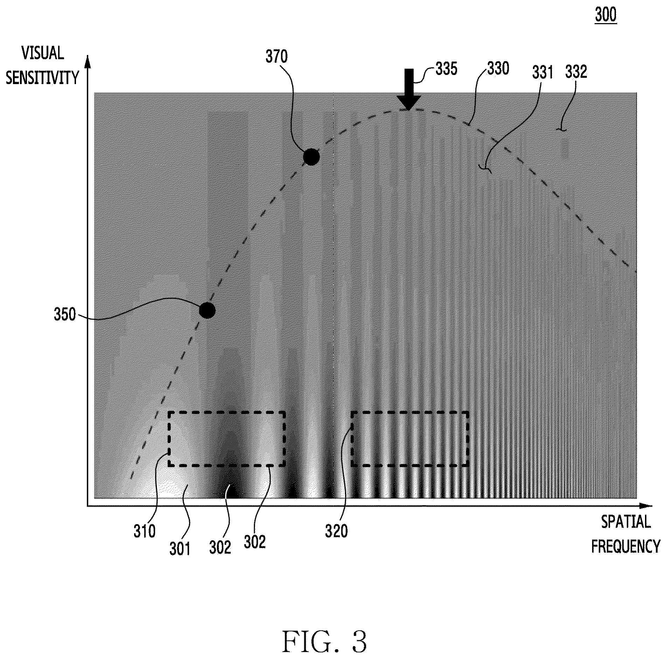

Referring to FIG. 1A, the patterned image 120 may include a plurality of repeating patterns 121 and 122 to adjust visibility according to a distance from the electronic device 101. For example, the visibility may indicate visibility for the image 110 (or the patterned image 120). Adjusting visibility according to the distance by the patterned image 120 including the repeating patterns 121 and 122 is exemplified and explained with reference to FIG. 3 below. The repeating patterns 121 and 122 may be referred to as periodic patterns, contrast patterns, or gradient patterns.

Each of the repeating patterns 121 and 122 may include a first portion 131, a second portion 132, and a third portion 133. For example, the first portion 131 may have a first grayscale level. As a non-limiting example, the first grayscale level may be 255, indicating white. For example, the second portion 132 may have a second grayscale level. As a non-limiting example, the second grayscale level may be 0, indicating black. In the above example, a case in which grayscale levels are distinguished by 8 bits criteria is exemplified, but the present disclosure is not limited thereto. For example, the third portion 133 may indicate a portion of the repeating pattern 121 between the first portion 131 and the second portion 132. For example, the third portion 133 may have at least one grayscale level that is gradually changed from the first grayscale level to the second grayscale level of the first portion 131.

In the above example, it is described that the first portion 131 has the first grayscale level and the second portion 132 has the second grayscale level, but the present disclosure is not limited thereto. For example, the first portion 131 may have a first grayscale range including the first grayscale level, the second portion 132 may have a second grayscale range including the second grayscale level, and the third portion 133 may have a third grayscale range that is gradually changed from the first grayscale range to the second grayscale range. The first grayscale range may be different (or distinct) from the second grayscale range. For example, the first grayscale range may include the first grayscale level and the third grayscale level. The first grayscale range may include grayscale levels that are gradually changed from the first grayscale level to the third grayscale level. For example, the first grayscale level may be a maximum grayscale level among the grayscale levels of the first grayscale range, and the third grayscale level may be a minimum grayscale level among the grayscale levels of the first grayscale range. For example, the second grayscale range may include the second grayscale level and a fourth grayscale level. For example, the second grayscale range may include grayscale levels that are gradually changed from the second grayscale level to the fourth grayscale level. For example, the second grayscale level may be a minimum grayscale level among the grayscale levels of the second grayscale range, and the fourth grayscale level may be a maximum grayscale level among the grayscale levels of the second grayscale range. The third grayscale range of the third portion 133 may include grayscale levels that are gradually changed from the third grayscale level to the fourth grayscale level. However, the present disclosure is not limited thereto. For example, the third grayscale range of the third portion 133 may include grayscale levels that are gradually changed from a grayscale level lower than the third grayscale level to a grayscale level higher than the fourth grayscale level. In other words, the repeating pattern 121 may be implemented as a sine wave that is gradually changed from a specific grayscale level at a specific position to another specific grayscale level at another specific position.

The patterned image 120 may be defined by a plurality of rows and a plurality of columns. For example, the patterned image 120 may be defined by first rows 141 and second rows 142, and first columns 146 and second columns 147. For example, the first rows 141 and second rows 142 may alternate with each other. For example, the first columns 146 and second columns 147 may alternate with each other. As a non-limiting example, each of the first rows 141 may include first portions including the first portion 131 and third portions including the third portion 133 (e.g., the right portion of the third portion 133 of FIG. 1A). As a non-limiting example, each of the second rows 142 may include third portions including the third portion 133 (e.g., the left portion of the third portion 133 of FIG. 1A) and second portions including the second portion 132. As a non-limiting example, each of the first columns 146 may include first portions including the first portion 131 and third portions including the third portion 133 (e.g., the right portion of the third portion 133 of FIG. 1A). As a non-limiting example, each of the second columns 147 may include second portions including the second portion 132 and third portions including the third portion 133 (e.g., the left portion of the third portion 133 of FIG. 1A). For example, a first portion 131 from among the first portions may be positioned at a position defined by a first row from among the first rows 141 and a first column from among the first columns 146. For example, a third portion 133 (e.g., the right portion of the third portion 133 of FIG. 1A) from among the third portions may be positioned at a position defined by the first row from among the first rows 141 and a second column from among the second columns 147. For example, another third portion 133 (e.g., the left portion of the third portion 133 of FIG. 1A) from among the third portions may be positioned at a position defined by a second row from among the second rows 142 and the first column from among the first columns 146. As a non-limiting example, another third portion 133 (e.g., the left portion of the third portion 133 of FIG. 1A) from among the third portions may be rightly positioned below (or aligned with) a first portion 131 from among the first portions positioned at a position defined by a first row from among the first rows 141 and a first column from among the first columns 146. For example, a second portion 132 from among the second portions may be positioned at a position defined by the second row from among the second rows 142 and the second column from among the second columns 147. As a non-limiting example, a second portion 132 from among the second portions may be rightly positioned below (or aligned with) a third portion 133 (e.g., the right portion of the third portion 133 of FIG. 1A) from among the third portions positioned at a position defined by the first row from among the first rows 141 and a second column from among the second columns 147. As a non-limiting example, the patterned image 120 may have a checkmate shape defined by the first portions, the second portions, and the third portions. However, the present disclosure is not limited thereto. For example, the patterned image 120 may have a shape having patterns including contrasting grayscale levels (e.g., a stripe shape).

The patterned image 120 may include first portions each having the first grayscale level of the repeating patterns 121 and 122, second portions each having the second grayscale level, and third portions between the first portions and the second portions. As a non-limiting example, the second portions may alternate with the first portions. A specific example of a display area of the display panel 160 shown to the user 105 and the third party 107 when the image 110 and the patterned image 120 including the repeating patterns 121 and 122 are displayed may be described with reference to FIG. 1B.

Referring to FIG. 1B, the electronic device 101 may concurrently display the patterned image 120 and the image 110 on a display area of the display panel 160 by identifying an event for a privacy display mode. For example, the privacy display mode may be a display mode for adjusting visibility of a displayed screen (e.g., the image 110) to protect the privacy of the user 105 of the electronic device 101. As a non-limiting example, the event for the privacy display mode may include receiving an input (e.g., an input of the user 105) for activating the privacy display mode.

A first contrast between the first portions and the second portions of the patterned image 120 when the display area of the display panel 160 is viewed to the third party 107 positioned at a first distance from the electronic device 101 (or from the display, from the display panel 160) may be visually highlighted relative to a second contrast between the first portions and the second portions of the patterned image 120 When the display area of the display panel 160 is viewed to the user 105 positioned at a second distance shorter than the first distance from the electronic device 101 (or from the display, from the display panel 160). Referring to an example 170 of the patterned image 120 viewed to the third party 107, the first contrast may indicate a contrast between the first portion 131 and the second portion 132 of the repeating pattern 121 in the patterned image 120. Referring to an example 150 of the patterned image 120 viewed to the user 105, the second contrast may indicate a contrast between the first portion 131 and the second portion 132 of the repeating pattern 121 in the patterned image 120.

Referring to the example 170, with respect to the third party 107 positioned at the first distance from the electronic device 101, the patterned image 120 may be relatively more visible than the image 110 according to the first contrast of the first portions and the second portions of the repeating patterns 121 and 122 of the patterned image 120. In contrast, referring to the example 150, with respect to the user 105 positioned at the second distance from the electronic device 101, the image 110 may be relatively more visible than the patterned image 120 according to the second contrast of the first portions and the second portions of the repeating patterns 121 and 122 of the patterned image 120. Accordingly, to the third party 107, the image 110 including contents may be viewed relatively blurry, and the patterned image 120 may be viewed relatively clearly. In contrast, to the user 105, the patterned image 120 may be viewed relatively blurry, and the image 110 may be viewed relatively clearly, according to the relatively low second contrast between the first portions and the second portions of the patterned image 120.

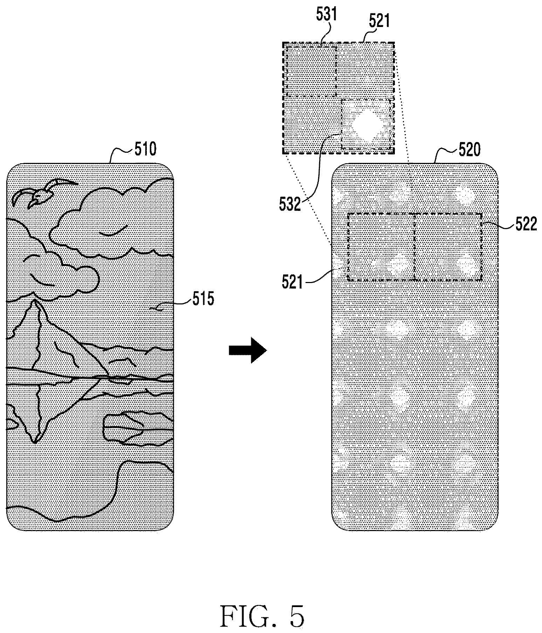

When generating the patterned image 120, the electronic device 101 may adjust an attribute of the patterned image 120. The attribute of the patterned image 120 may include a color of the repeating patterns 121 and 122 of the patterned image 120 (or a color of the first portion 131 and the second portion 132 of the repeating pattern 121), the intensity of the patterned image 120, or an interval (or repetition period) of the repeating patterns 121 and 122 of the patterned image 120. Specific details related thereto may be referenced in FIGS. 5 to 7 below.

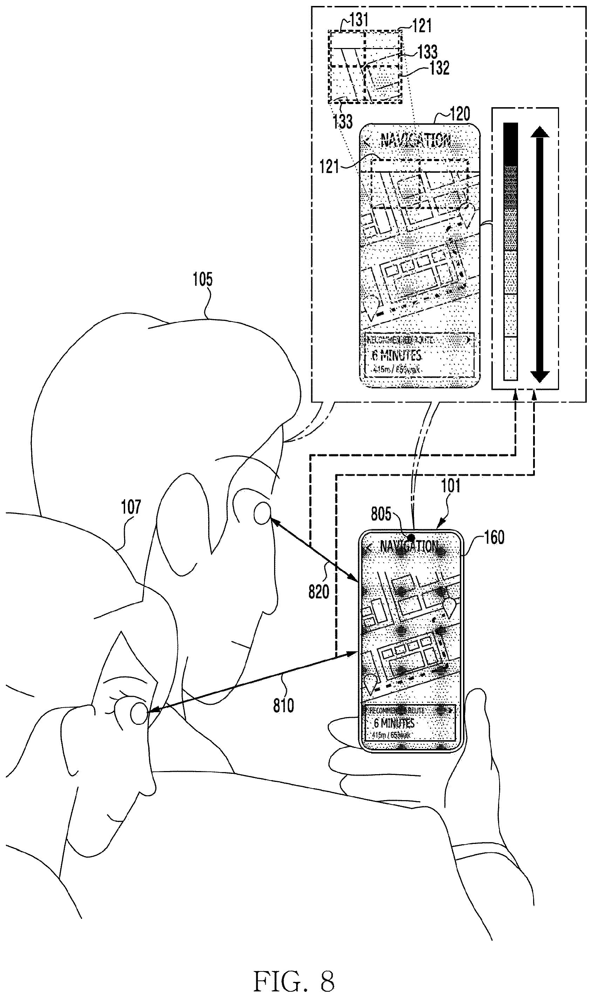

The electronic device 101 may obtain sensing data through at least one sensor. As a non-limiting example, the at least one sensor may include an image sensor, a camera, or a time of flight (ToF) sensor. For example, the electronic device 101 may identify the first distance from the electronic device 101 to the third party 107 and the second distance from the electronic device 101 to the user 105, by using the sensing data. The electronic device 101 may generate a patterned image 120 based on the first distance and the second distance. Specific details related thereto may be referenced in FIG. 8 below.

Referring to FIGS. 1A and 1B, the present disclosure may reduce the visibility of the contents of the image 110 to people (e.g., the third party 107) other than the user 105 of the electronic device 101 by displaying the patterned image 120 superimposed on the image 110. In addition, the present disclosure may generate the patterned image 120 so that the patterned image 120 is viewed relatively blurry to the user 105 of the electronic device 101 who is positioned relatively close when displaying the patterned image 120 superimposed on the image 110. Accordingly, the present disclosure may maintain (or relatively less deteriorate) the visibility of the image 110 to the user 105. Accordingly, the present disclosure may effectively protect the privacy of the user 105 while maintaining the visibility of the image 110 to the user 105.

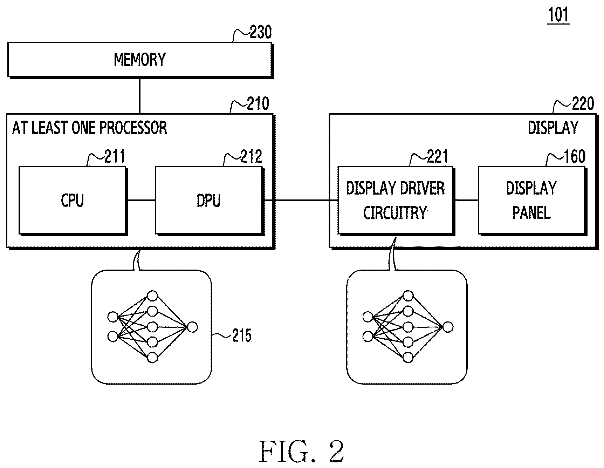

FIG. 2 is a schematic view of an exemplary electronic device.

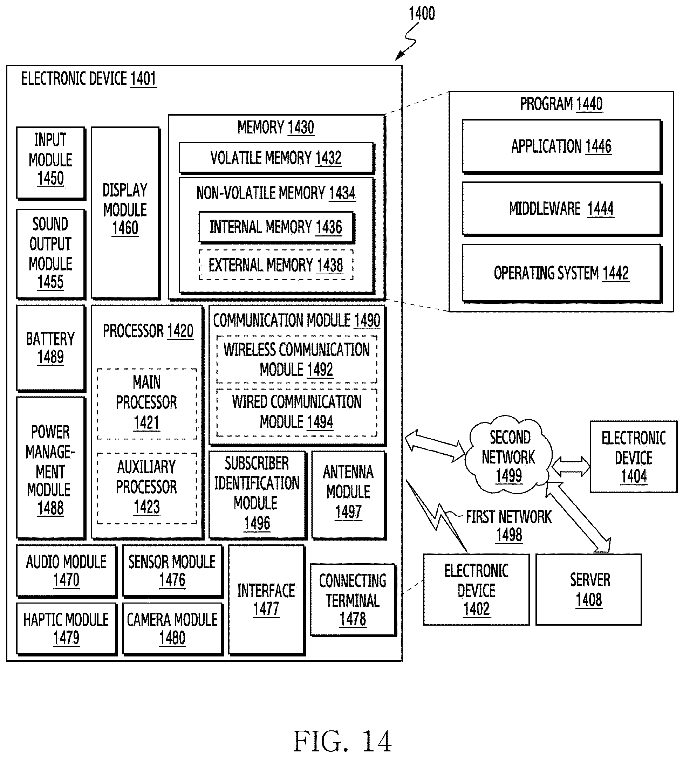

Referring to FIG. 2, the electronic device 101 may include at least one processor 210 including processing circuitry, a display 220, and memory 230. The electronic device 101 may include at least a portion of the electronic device 1401 of FIG. 14 or may correspond to at least a portion of the electronic device 1401 of FIG. 14.

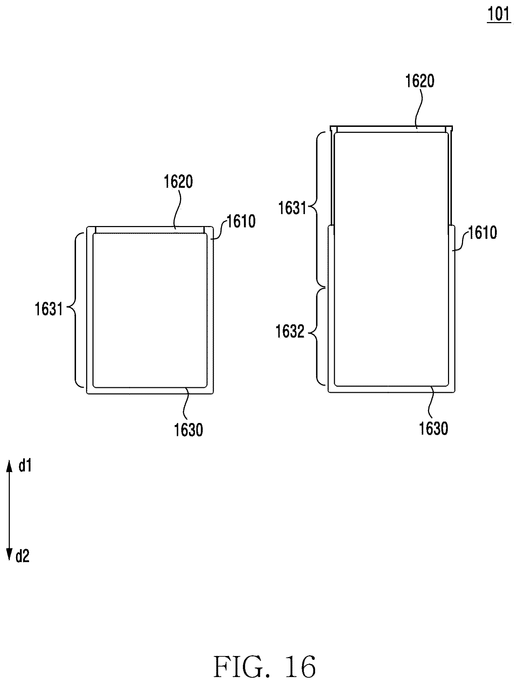

For example, the electronic device 101 may have various form factors, such as a smartphone, a laptop personal computer (PC), a tablet PC, a head-mounted display (HMD) device, a watch, and other computing devices. The electronic device 101 may be referred to as a mobile device, a user terminal, a user equipment (UE), a multi-function device, a portable communication device, and/or a portable device. The form factor of the electronic device 101 is not limited to the exemplary form factor (e.g., bar-type electronic device including the display panel 160) illustrated in FIGS. 1A and 1B. In an example, the electronic device 101 may be a device including a display panel 160 that is a flexible display. For example, the electronic device 101 may be referred to as a foldable electronic device, a rollable electronic device, or a multi-foldable electronic device. Specific details related thereto may be referenced in FIGS. 16 to 18 below. The patterned image (e.g., the patterned image 120 of FIG. 1A) exemplified in the present disclosure may be displayed through the display panel 160 of various form factors described above (e.g., a smartphone, a laptop PC, a tablet PC, a head-mounted display (HMD) device, a watch, other computing devices, a foldable electronic device, a rollable electronic device, or a multi-foldable electronic device).

The at least one processor 210 may include at least a portion of the processor 1420 of FIG. 14 or may correspond to at least a portion of the processor 1420 of FIG. 14. The at least one processor 210 may include a central processing unit (CPU) 211 (e.g., including processing circuitry) and a display processing unit (DPU) 212 (e.g., including processing circuitry). As a non-limiting example, the at least one processor 210 may further include a graphic processing unit (GPU) (e.g., including processing circuitry). The at least one processor 210 may be configured to execute instructions stored in the memory 230.

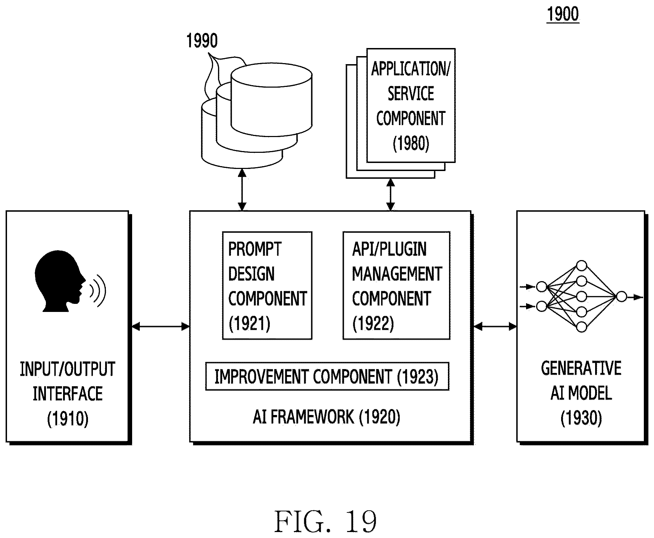

As a non-limiting example, the at least one processor 210 may perform at least a portion of operations described below, by using a trained model 215 (e.g., a generative artificial intelligence (AI) model 1930 of FIG. 19). For example, the at least one processor 210 may determine, using the trained model 215, to change a normal display mode to a privacy display mode, and/or to change the privacy display mode to the normal display mode. For example, the at least one processor 210 may determine, by analyzing an image to be displayed using the trained model 215, to change from the normal display mode to the privacy display mode when contents in the image are contents that should be restrictively displayed.

As a non-limiting example, the at least one processor 210 may adjust the attribute of a patterned image (e.g., the patterned image 120 of FIGS. 1A and 1B) for the privacy display mode by analyzing an image to be displayed on a screen using the trained model 215.

As a non-limiting example, the at least one processor 210 may transmit at least one first command indicating the privacy display mode to display driver circuitry 221, based on a determination to change the normal display mode to the privacy display mode (e.g., the first privacy display mode or the second privacy display mode). For example, the display driver circuitry 221 may change the normal display mode to the privacy display mode based on the at least one first command. As a non-limiting example, the at least one processor 210 may transmit at least one second command indicating the normal display mode to the display driver circuitry 221, based on a determination to change the privacy display mode to the normal display mode. For example, the display driver circuitry 221 may change the privacy display mode to the normal display mode, based on the at least one second command.

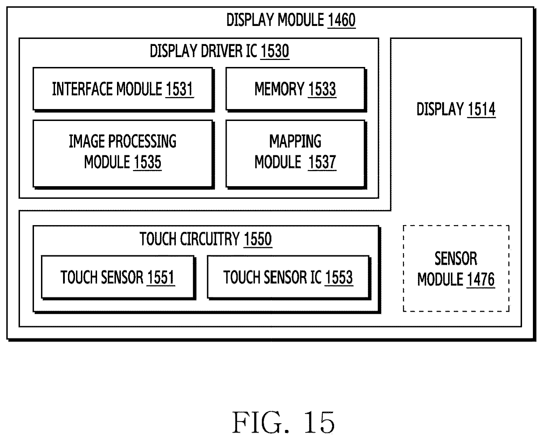

The display 220 may include at least a portion of the display module 1460 of FIG. 14 or correspond to at least a portion of the display module 1460 of FIG. 14. The display 220 may include display driver circuitry (or display driver integrated circuitry) 221 and a display panel 160. The display driver circuitry 221 may include at least a portion of the display driver IC 1530 of FIG. 15 or correspond to at least a portion of the display driver IC 1530 of FIG. 15. As a non-limiting example, the display driver circuitry 221 may perform at least a portion of operations described below, by using a trained model (e.g., the generative artificial intelligence (AI) model 1930 of FIG. 19). The display panel 160 may include at least a portion of the display panel 1510 of FIG. 15 or may correspond to at least a portion of the display panel 1510 of FIG. 15.

The display 220 may be operated or driven for a command mode, a video mode, a hybrid video mode, and/or adaptive refresh panel (ARP) of the mobile industry processor interface (MIPI) display serial interface (DSI).

The memory 230 may include one or more storage media. For example, the at least one storage medium may include permanent memory such as a hard drive, flash memory, or read-only memory (ROM), semi-permanent memory such as random-access memory (RAM), any other suitable type of storage assembly, or any combination thereof. The memory 230 may include cache memory, which is one or more different types of memory used to temporarily store data for a function (or feature) of the electronic device 101. The memory 230 may be incorporated onto one or more suitable types of components (e.g., a subscriber identity module (SIM) card and/or an secure digital (SD) memory card), which may be fixedly embedded in the electronic device 101 or repeatedly inserted into and removed from the electronic device 101. For example, the memory 230 may include at least a portion of the memory 1430 of FIG. 14 or may correspond to at least a portion of the memory 1430 of FIG. 14.

The memory 230 may store one or more software applications such as an operating system software application, a firmware software application, a media playback software application, a media editing software application, a software application for communication with other users, a translation software application, a digital assistant software application, and/or any other suitable software applications. For example, the one or more software applications may include instructions executable by at least a portion of the at least one processor 210.

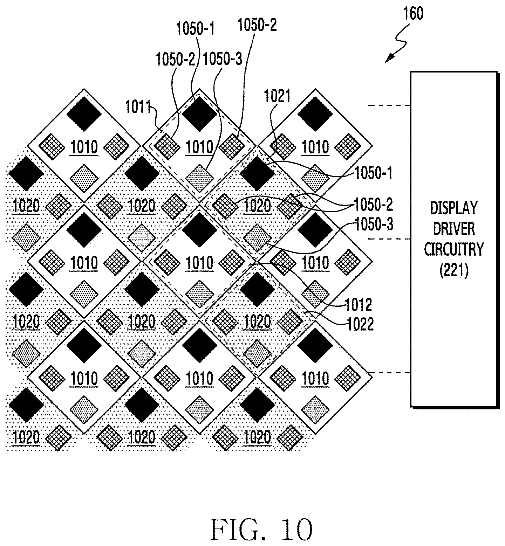

As a non-limiting example, the display panel 160 within the display 220 may have a structure for adjusting a viewing angle of a screen (e.g., the image 110) displayed on the display panel 160. The structure will be described in more detail with reference to FIGS. 10 to 13.

The electronic device 101 may provide the privacy display mode, in order to protect privacy (or user privacy) in relation to displaying a screen (e.g., the image 110) on the display panel 160. For example, the privacy display mode may be described as a display mode for reducing a probability that information within a screen displayed on the display panel 160 is viewable to a third party (e.g., the third party 107 of FIGS. 1A and 1B) who is distinct from a user (e.g., user 105 of FIGS. 1A and 1B) of the electronic device 101. For example, the privacy display mode may be described as a display mode for reducing a probability that information within a screen displayed on the display panel 160 is viewable from a second space positioned further away than a first space in front of the display panel 160. Alternatively, the privacy display mode may be described as a display mode for reducing a probability that information within a screen displayed on the display panel 160 is viewable from a second space around the first space in front of the display panel 160. For example, the privacy display mode may be described as a display mode for reducing visibility from the second space.

The at least one processor 210 may generate an analysis result for contents within an image by using the trained model 215. For example, the contents may include at least one image object or at least one text object included within the image. For example, the analysis result may include an identification (or classification) result for an image object within the image, or an optical character recognition (OCR) result for text extracted from the image object.

As a non-limiting example, the at least one processor 210 may determine whether to execute the privacy display mode (or whether to apply a privacy filter), by using the trained model 215. As a non-limiting example, the trained model 215 may generate a command to execute the privacy display mode according to a determination to execute the privacy display mode, and transmit (or provide) the command to the display 220 (or the display driver circuitry 221). However, the present disclosure is not limited thereto. For example, the at least one processor 210 may generate a command according to a determination to execute the privacy display mode based on the trained model 215, and transmit the generated command through an interface to the display driver circuitry 221.

FIG. 3 illustrates an example of a chart for visual sensitivity according to a spatial frequency.

FIG. 3 illustrates an example of a chart 300 for visual sensitivity according to a spatial frequency that is considered when generating a patterned image (e.g., the patterned image 120 of FIG. 1A and FIG. 1B). In order to adjust visibility of a patterned image according to distance, the visual sensitivity that changes as a spatial frequency changes may be used.

A horizontal axis of the chart 300 indicates a spatial frequency (unit: Hz), and a vertical axis indicates visual sensitivity. For example, the visual sensitivity may be referred to as contrast sensitivity. For example, the visual sensitivity may be proportional to an inverse of contrast. The chart 300 may include a portion 301 of a first color (e.g., white) and a portion 302 of a second color (e.g., black). For example, in the chart 300, in order to include a contrasting pattern, portions of the first color and portions of the second colors may be alternately included.

Referring to the chart 300, the spatial frequency may be defined as the number of portions that are changed within the same space. For example, a space 310 may include two portions 301 and one portion 302. A space 320 having the same size as the space 310 may include nine portions 301 and nine portions 302. In the above example, the spatial frequency for the space 310 may be lower (or low frequency) than the spatial frequency for the space 320. In other words, the spatial frequency may be higher (or high frequency) as it is positioned to the right in the chart 300. When an image including patterns (including portion 301 and portion 302) is displayed on the electronic device 101 at a fixed position, the space 310 may indicate an example of the image as viewed by a person at a relatively close position (e.g., the user 105 in FIGS. 1A and 1B), and the space 320 may indicate an example of the image as viewed by a person at a relatively far position (e.g., the third party 107 in FIGS. 1A and 1B).

The chart 300 may include a line 330 defining an area where a boundary between the portions 301 and the portions 302, which are alternately included in the chart 300, may be distinguished by the eyes of a person (or user). For example, a first area 331 positioned below the line 330 may be referred to as an area in which a boundary between contrasting portions 301 and portions 302 may be distinguished by the eyes of a person. In contrast, a second area 332 positioned above the line 330 may be referred to as an area in which a boundary between contrasting portion 301 and portion 302 cannot be distinguished by the eyes of a person. In other words, the line 330 may indicate a set of threshold values capable of distinguishing the boundary between the contrasting portions 301 and portions 302 according to spatial frequency. Each of the threshold values may be a value of visual sensitivity.

Referring to the chart 300, the visual sensitivity may have a relatively low value 350 when viewed by a person positioned relatively close (e.g., the second distance). In contrast, the visual sensitivity may have a relatively high value 370 when viewed by a person positioned relatively far away (e.g., the first distance). In other words, when the visual sensitivity is low, the contrasting pattern (including portion 301 and portion 302) may be relatively less viewable, and when the visual sensitivity is high, the contrasting pattern (including portion 301 and portion 302) may be relatively more viewable. In the above example, it is described that the visual sensitivity increases as the distance increases, but the present disclosure is not limited thereto. Referring to the line 330 of the chart 300, at a spatial frequency higher than a reference value 335, the value of the visual sensitivity may decrease again. For example, the reference value 335 may define a point at which the visual sensitivity (or contrast sensitivity) according to the spatial frequency begins to decrease. In other words, when positioned outside a reference distance, the value of the visual sensitivity may decrease again. In the above example, the first distance may be lower than the reference distance.

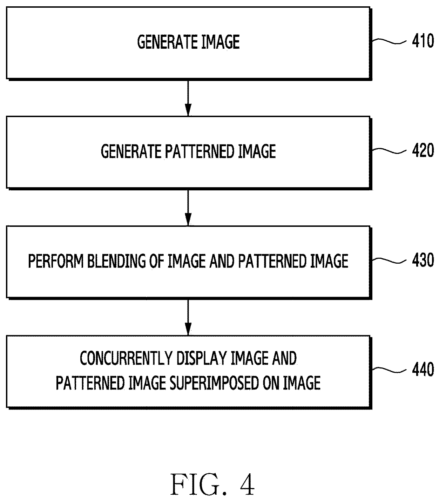

Referring to FIG. 3, the electronic device 101 may generate a patterned image (e.g., patterned image 120 of FIG. 1A and FIG. 1B) including contrasting patterns by using visual sensitivity that changes according to spatial frequency. Hereinafter, FIG. 4 illustrates an example of an operation flow for a method in which the electronic device 101 generates an image including contents and a patterned image superimposed on the image, and concurrently displays the image and the patterned image.

FIG. 4 illustrates an example of an operation flow for generating a patterned image and concurrently displaying the generated patterned image and an image, in order to adjust visibility of the image according to a distance from a display.

At least a portion of the methods of FIG. 4 may be performed by the electronic device 101 of FIG. 2. For example, at least a portion of the methods may be controlled by the at least one processor 210 of the electronic device 101. However, the present disclosure is not limited thereto. For example, at least a portion of the methods may be controlled (or configured) by the display driver circuitry 221 of the electronic device 101. In the following embodiment, each operation may be performed sequentially, but is not necessarily performed sequentially. For example, the sequence of each operation may be changed, and at least two operations may be performed in parallel.

In operation 410, the at least one processor 210 may generate an image. For example, the at least one processor 210 may generate an image to be displayed through the display 220 (or on a display area of the display panel 160).

In operation 420, the at least one processor 210 may generate a patterned image. As a non-limiting example, the at least one processor 210 may generate the patterned image based on identifying an event for a privacy display mode. For example, the patterned image may be an image for the privacy display mode.

The patterned image may be generated based on visual sensitivity according to the spatial frequency described in FIG. 3. As a non-limiting example, the patterned image may include repeating patterns. The patterned image including the repeating patterns may be used to adjust the visibility of the display 220 (or the display panel 160, or the image displayed on the display panel 160) according to distance. The repeating patterns may be referred to as periodic patterns, contrast patterns, or gradient patterns. The patterned image may include first portions each having a first grayscale level of the repeating patterns, second portions each having a second grayscale level, and third portions between the first portions and the second portions.

As a non-limiting example, each of the repeating patterns may include a first portion, a second portion, and a third portion. The first portion may be included in the first portions of the patterned image. The second portion may be included in the second portions of the patterned image. The third portion may be included in the third portions of the patterned image. For example, the first portion may have a first grayscale level. As a non-limiting example, the first grayscale level may be 255, indicating white. For example, the second portion may have a second grayscale level. As a non-limiting example, the second grayscale level may be 0, indicating black. In the above example, a case in which grayscale levels are distinguished by 8 bits criteria is exemplified, but the present disclosure is not limited thereto. For example, the third portion may indicate a portion of a repeating pattern between the first portion and the second portion. For example, the third portion may have at least one grayscale level that is gradually changed from the first grayscale level of the first portion to the second grayscale level.

In the above example, it is described that the first portion has the first grayscale level and the second portion has the second grayscale level, but the present disclosure is not limited thereto. For example, the first portion may have a first grayscale range including the first grayscale level, the second portion may have a second grayscale range including the second grayscale level, and the third portion may have a third grayscale range that is gradually changed from the first grayscale range to the second grayscale range. For example, the first grayscale range may include the first grayscale level and another grayscale level having a grayscale level that is gradually changed from the first grayscale level. For example, the second grayscale range may include the second grayscale level and another grayscale level having a grayscale level that is gradually changed from the second grayscale level. In other words, the repeating pattern may be implemented as a sine wave that is gradually changed from a specific grayscale level at a specific position to another specific grayscale level at another specific position.

As a non-limiting example, the at least one processor 210 may identify a representative color of the image generated in operation 410. The at least one processor 210 may identify the representative color that occupies the largest proportion among the colors (or tones) representing the image. The at least one processor 210 may apply the identified representative color to the first portions of the patterned image, and apply a complementary color of the identified representative color to the second portions of the patterned image. Accordingly, the third portions between the first portions and the second portions may have a color and a grayscale level according to the representative color and the complementary color of the representative color. Specific details related thereto may be referenced in FIG. 5 below.

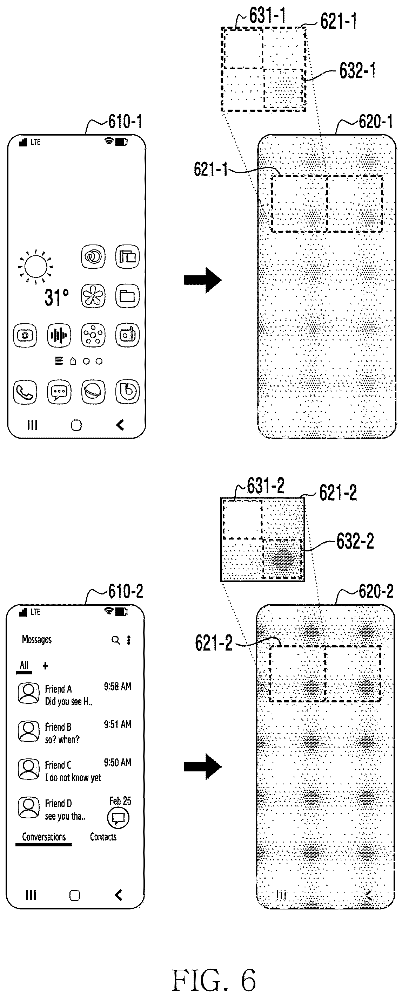

As a non-limiting example, the at least one processor 210 may generate the patterned image based on contents within the image. For example, the at least one processor 210 may identify a contrast ratio between the first grayscale level of each of the first portions of the patterned image and the second grayscale level of each of the second portions of the patterned image, in accordance with contents within the image. For example, the at least one processor 210 may generate the patterned image including repeating patterns having the identified contrast ratio. The contrast ratio may be related to an intensity of the patterned image (or repeating patterns of the patterned image). For example, as the contrast ratio increases, the intensity of the repeating patterns of the patterned image may increase. As the intensity increases, the patterned image (or the repeating patterns of the patterned image) may be more viewable relative to the image. Specific details related thereto may be referenced in FIG. 6 below.

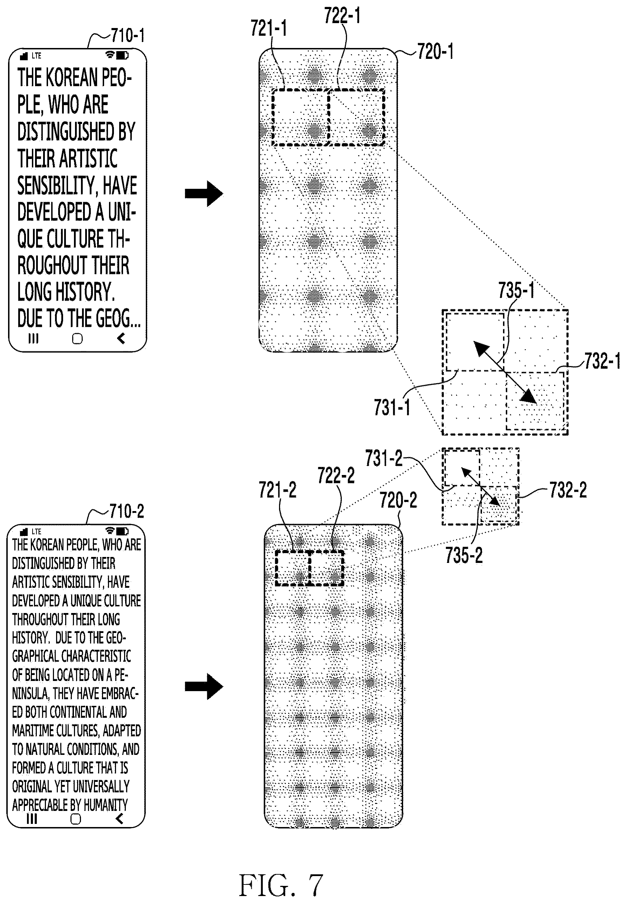

As a non-limiting example, the at least one processor 210 may generate the patterned image based on texts in the image. For example, the at least one processor 210 may identify a spacing between each of the first portions and each of the second portions of the patterned image based on a font size of texts within the image. For example, the at least one processor 210 may generate the patterned image including repeating patterns having the identified spacing. The spacing may be related to a spacing between the first portion and the second portion included in each of the repeating patterns, a spacing between the repeating patterns, or a size of each of the repeating patterns. For example, the spacing may be referred to as a repetition period or a pattern period. As the spacing becomes smaller, the patterned image (or the repeating patterns of the patterned image) may be more viewable or less viewable, relative to the image. Specific details related thereto may be referenced in FIG. 7 below.

As a non-limiting example, the at least one processor 210 may identify (or measure) a distance to an external environment, by using at least one sensor of the electronic device 101. For example, the at least one processor 210 may identify a distance to a user within the external environment and a distance to a third party. The at least one processor 210 may generate the patterned image based on the identified distance. For example, the at least one processor 210 may identify a first distance to a third party and a second distance to a user of the electronic device 101, respectively, and generate the patterned image including repeating patterns having high visual sensitivity at the first distance and low visual sensitivity at the second distance. Specific details related thereto may be referenced in FIG. 8 below.

As a non-limiting example, the at least one processor 210 may provide (or transmit) the image generated in operation 410 to a trained model (e.g., the trained model 215 of FIG. 2) executed on the electronic device 101. For example, the trained model may be included in the at least one processor 210 and/or the display driver circuitry 221. For example, the trained model may identify (or generate) contents within the image by analyzing the image. Alternatively, for example, the trained model may identify (or generate) a weight for synthesis (or, blending, composition, combining) described below, by analyzing the contents within the image. The at least one processor 210 may generate the patterned image based on the contents in the image obtained from the trained model. The at least one processor 210 may perform blending between the image and the patterned image based on the contents and the weight in the image obtained from the trained model.

In operation 430, the at least one processor 210 may perform blending of the image and the patterned image. As a non-limiting example, the at least one processor may generate a composite image of the image and the patterned image based on the blending. When performing the blending, the intensity of the patterned image (or repeating patterns of the patterned image) may be considered.

As a non-limiting example, the at least one processor 210 may perform the blending based on a weight for the blending of the patterned image with respect to the image. For example, as a value of the weight for the blending increases, the intensity of repeating patterns of the patterned image may increase. As the intensity increases, the patterned image (or the repeating patterns of the patterned image) may be more viewable relative to the image. For example, the weight may be referred to as a blending weight, a blending ratio, or a composition ratio. For example, the weight for the blending may be determined according to contents within the image. Specific details related thereto may be referenced in FIG. 6.

In operation 440, the at least one processor 210 may concurrently display the image and the patterned image superimposed on the image. For example, the at least one processor 210 may display the image through the display 220 (or on the display area of the display panel 160) and concurrently display the patterned image superimposed (or overlaid, or overlying) on the image. At this time, the at least one processor 210 may concurrently display the image and the patterned image within the privacy display mode (or for the privacy display mode).

FIG. 4 illustrates that the at least one processor 210 performs the blending of the image and the patterned image to generate one composite image, and the generated one composite image is displayed through the display panel 160, but the present disclosure is not limited thereto. For example, the at least one processor 210 may bypass (or refrain from, or skip) performing the blending of the image and the patterned image, and transmit both the image and the patterned image to the display driver circuitry 221. For example, the display driver circuitry 221 may control the display panel 160 to substantially display one image through the display panel 160 after performing composition on the image and the patterned image for layers. At this time, the patterned image may be superimposed (or overlaid, overlying) on the image.

In addition, FIG. 4 illustrates operations performed by the at least one processor 210, but the present disclosure is not limited thereto. For example, as in operation 410, the at least one processor 210 may generate an image to be displayed through the display 220, and then transmit the generated image to the display driver circuitry 221. For example, the display driver circuitry 221 may generate the patterned image. As a non-limiting example, the display driver circuitry 221 may perform blending of the image and the patterned image through a circuit for image processing (e.g., the image processing module 1135 of FIG. 15). For example, the display driver circuitry 221 may control the display panel 160 to concurrently display the image and the patterned image (or an image in which the image and the patterned image are blended).

FIG. 5 illustrates an example of repeating patterns of a patterned image having a color determined based on a color of an image to be displayed.

Referring to FIG. 5, the at least one processor 210 may generate an image 510 to be displayed via the display 220 (or on the display area of the display panel 160). For example, the generated image 510 may be represented in a plurality of colors (tones).

The at least one processor 210 may identify a representative color 515 among the colors included in the image 510 (or, representing the image 510). For example, the representative color 515 of the image 510 may be identified as a color that occupies the largest proportion among the colors. Alternatively, for example, the representative color 515 of the image 510 may be identified as a color that is most easily visible (or visually highlighted) by a person among the colors. Alternatively, for example, the representative color 515 of the image 510 may be identified as a color of a background portion of the image 510. In the example of FIG. 5, when the image 510 is an image representing a clear sky, the representative color of the image 510 may be sky blue color. For example, the at least one processor 210 may identify a complementary color of the representative color 515 when identifying the representative color 515 of the image 510. In the example in which the representative color 515 is sky blue color, the complementary color may be vermillion (or orange red color).

The at least one processor 210 (or the display driver circuitry 221) may generate a patterned image 520 based on the representative color 515 of the image 510 and the complementary color of the representative color 515. For example, the patterned image 520 may include a plurality of repeating patterns 521 and 522. The representative color 515 may be applied to a first portion 531 of the repeating pattern 521, and the complementary color of the representative color 515 may be applied to a second portion 532 of the repeating pattern 521. In other words, the first portion 531 may have the representative color 515, and the second portion 532 may have the complementary color of the representative color 515.

The at least one processor 210 may generate the patterned image 520 by applying the representative color 515 of the image 510 to each of the first portions of the patterned image 520 and applying the complementary color of the representative color 515 of the image 510 to each of the second portions of the patterned image 520. When the patterned image 520 generated based on the representative color 515 of the image 510 and the complementary color of the representative color 515 are concurrently displayed on the image 510, the visibility of the image 510 shown by a third party (e.g., the third party 107 of FIG. 1A) different from the user of the electronic device 101 may be further degraded.

FIG. 6 illustrates an example of repeating patterns of a patterned image having an intensity determined based on contents within an image to be displayed.

Referring to FIG. 6, the at least one processor 210 may generate an image 610-1 to be displayed through the display 220 (or on the display area of the display panel 160). For example, the image 610-1 may include a home screen of the electronic device 101 (or an execution screen of an application for the home screen). In the example of FIG. 6, contents of the image 610-1 may be identified as a home screen. In addition, the at least one processor 210 may generate an image 610-2 to be displayed through the display 220 (or on the display area of the display panel 160). For example, the image 610-2 may include a screen including messages received from an external electronic device (or an execution screen of a message application). In the example of FIG. 6, contents of the image 610-2 may be identified as messages.

The at least one processor 210 may determine whether the contents of the image satisfy criteria. As a non-limiting example, the criteria may include that the contents include personal information, or that the contents include contents causing activation of a privacy display mode. As a non-limiting example, the personal information may include a message, a password, a screen of a financial application, or information preset by the user as a privacy object within the electronic device 101.

In the example of FIG. 6, the at least one processor 210 may determine that the contents of the image 610-1 do not satisfy the criteria. Additionally, the at least one processor 210 may determine that the contents of the image 610-2 satisfy the criteria.

As a non-limiting example, the at least one processor 210 may identify the intensity of the patterned image 620-1 as a first intensity, based on determining that the contents of the image 610-1 do not satisfy the criteria. For example, when the intensity is a contrast ratio, the at least one processor 210 may identify a contrast ratio of the patterned image 620-1 as a first ratio. For example, the contrast ratio of the patterned image 620-1 may indicate a contrast ratio between a first grayscale level of a first portion 631-1 and a second grayscale level of a second portion 632-1 within a repeating pattern 621-1 of the patterned image 620-1. In other words, the first ratio may be a ratio between the first grayscale level of the first portion 631-1 and the second grayscale level of the second portion 632-1. As a non-limiting example, the at least one processor 210 may identify the intensity of the patterned image 620-2 as a second intensity, based on determining that the contents of the image 610-2 satisfy the criteria. The second intensity may be higher than the first intensity. For example, when the intensity is a contrast ratio, the at least one processor 210 may identify a contrast ratio of the patterned image 620-2 as a second ratio. For example, the contrast ratio of the patterned image 620-2 may indicate a contrast ratio between the first grayscale level of the first portion 631-2 and the second grayscale level of the second portion 632-2 within a repeating pattern 621-2 of the patterned image 620-2. In other words, the second ratio may be a ratio between the first grayscale level of the first portion 631-2 and the second grayscale level of the second portion 632-2. In the above example, the second ratio may be greater than the first ratio. In other words, a difference between the first grayscale level of the first portion 631-1 and the second grayscale level of the second portion 632-1 may be smaller than a difference between the first grayscale level of the first portion 631-2 and the second grayscale level of the second portion 632-2.

The above example exemplifies a case in which the intensity of the patterned image is a contrast ratio, but the present disclosure is not limited thereto. For example, it may be applied substantially equally even when the intensity of the patterned image is a weight.

As a non-limiting example, the at least one processor 210 may identify the intensity of the patterned image as a first intensity, based on determining that the contents of the image 610-1 do not satisfy the criteria. For example, when the intensity is a weight, the at least one processor 210 may identify a weight at which the patterned image is to be blended with respect to the image 610-1 as a first value. As a non-limiting example, the at least one processor 210 may identify the intensity of the patterned image as a second intensity, based on determining that the contents of the image 610-2 satisfy the criteria. The second intensity may be higher than the first intensity. For example, when the intensity is a weight, the at least one processor 210 may identify a weight at which the patterned image is to be blended with respect to the image 610-2 as a second value. The second value may be higher than the first value. In the above example, it is assumed that the contrast ratio of the patterned image to be blended with respect to image 610-1 and image 610-2 is the same. When the image 610-1 and the patterned image are displayed concurrently after being blended with the image 610-1 according to the first value, the image 610-1 may be visually highlighted relative to the patterned image, as in the example 150 of FIG. 1B. In contrast, when the image 610-2 and the patterned image are displayed concurrently after being blended with the image 610-2 according to the second value, the patterned image may be visually highlighted relative to the image 610-2, as in the example 170 of FIG. 1B.

As described above, the at least one processor 210 may identify an intensity (e.g., contrast ratio or weight) of a patterned image based on contents within an image and may concurrently display the image and a patterned image generated based on the intensity. As the intensity of the patterned image increases, the patterned image may be visually highlighted with respect to the image. Accordingly, the image may be relatively less visible by the patterned image.

FIG. 6 illustrates that a patterned image 620-1 having a low level of contrast ratio is concurrently displayed, even in a case of the image 610-1 that is a home screen, but this is only an example for convenience of explanation and the present disclosure is not limited thereto. As a non-limiting example, the at least one processor 210 may deactivate the privacy display mode for image 610-1 that is a home screen.

FIG. 7 illustrates an example of repeating patterns of a patterned image having a spacing determined based on a font size of texts in an image to be displayed.

Referring to FIG. 7, the at least one processor 210 may generate an image 710-1 to be displayed through the display 220 (or on the display area of the display panel 160). For example, the image 710-1 may include texts having a first size. In addition, the at least one processor 210 may generate an image 710-2 to be displayed through the display 220 (or on the display area of the display panel 160). For example, the image 710-2 may include texts having a second size smaller than the first size. In other words, the image 710-2 may include a larger amount of texts within the same area compared to the image 710-1.

The at least one processor 210 may generate a patterned image based on a font size of texts. For example, the at least one processor 210 may reduce a repetition period of the patterned image as the font size decreases. For example, the repetition period may be related to a size of each of the repeating patterns in the patterned image, a spacing between the repeating patterns in the patterned image, or a spacing between portions in the repeating patterns.

As a non-limiting example, the at least one processor 210 may identify that texts of the image 710-1 have the first size. For example, the at least one processor 210 may determine the repetition period of the patterned image as a first period, according to the first size of the texts. For example, the patterned image 720-1 may include a repeating pattern 721-1 having a first size and a repeating pattern 722-1 having the first size. For example, the repeating pattern 721-1 having the first size may be formed based on a first spacing 735-1 between a first portion 731-1 in the repeating pattern 721-1 and a second portion 732-1 in the repeating pattern 721-1.

As a non-limiting example, the at least one processor 210 may identify that texts of the image 710-2 have the second size. For example, the at least one processor 210 may determine the repetition period of the patterned image as a second period, according to the second size of the texts. The second period may be shorter than the first period. For example, the patterned image 720-2 may include a repeating pattern 721-2 having a second size and a repeating pattern 722-2 having the second size. For example, the repeating pattern 721-2 having the second size may be formed based on a second spacing 735-2 between a first portion 731-2 in the repeating pattern 721-2 and a second portion 732-2 in the repeating pattern 721-2.

In the example of FIG. 7, the first size of the repeating pattern 721-1 may be larger than the second size of the repeating pattern 721-2. The first spacing 735-1 between the first portion 731-1 and the second portion 732-1 in the repeating pattern 721-1 may be longer than the second spacing 735-2 between the first portion 731-2 and the second portion 732-2 in the repeating pattern 721-2. A size of the first portion 731-1 in the repeating pattern 721-1 may be larger than a size of the first portion 731-2 in the repeating pattern 721-2. In the patterned image 710-1 and the patterned image 710-2, which have the same size, the number of repeating patterns 721-1 and 722-1 of the patterned image 710-1 may be less than the number of repeating patterns 721-2 and 722-2 of the patterned image 710-2.

As described above, the at least one processor 210 may adjust a repetition period (or pattern period) of the patterned image according to the font size of the texts as contents in the image. In the example of FIG. 7, it is described that the repetition period (or pattern period) of the patterned image increases or the size of the repeating patterns decreases as the font size of the texts in the image decreases, but the present disclosure is not limited thereto. For example, as the font size of the texts in the image increases, the repetition period (or pattern period) of the patterned image may decrease or the size of the repeating patterns may increase. Accordingly, even when the font size of the texts is relatively small (or the font size of the texts is relatively large), the privacy of the image may be protected.

FIG. 8 illustrates an example of a method of generating a patterned image according to distances of users identified through sensing data.

Referring to FIG. 8, as illustrated in FIG. 1B, the electronic device 101 may concurrently display the patterned image 120 and the image 110 on the display area of the display panel 160 by identifying an event for the privacy display mode.

As a non-limiting example, the at least one processor 210 may use a distance to an external environment to generate a patterned image 120 to be concurrently displayed. For example, the at least one processor 210 may obtain sensing data through at least one sensor 805 and identify a distance to an external environment based on the obtained sensing data. For example, the at least one processor 210 may identify a first distance 810 from the electronic device 101 (or the display 220, the display panel 160) to the third party 107. For example, the at least one processor 210 may identify a second distance 820 from the electronic device 101 (or the display 220, the display panel 160) to the user 105.

As a non-limiting example, the at least one sensor 805 may include a sensor for identifying a distance to an external environment. For example, the at least one sensor 805 may include an image sensor, a range sensor, a ToF sensor, a camera, or an optical sensor.

The at least one processor 210 may generate a patterned image 120 that allows the patterned image 120 to be visually highlighted (or have a higher visual sensitivity value) than the image 110 from the third party 107 positioned at a first distance 810, and allows the image 110 to be visually highlighted (or have a lower visual sensitivity value) than the patterned image 120 from the user 105 positioned at a second distance 820. For example, a first contrast between the first portion 131 and the second portion 132 of each of the repeating patterns 121 and 122 of the patterned image 120 when the display panel 160 is shown from the third party 107 positioned at the first distance 810 may be visually highlighted relative to a second contrast between the first portion 131 and the second portion 132 of each of the repeating patterns 121 and 122 of the patterned image 120 when the display panel 160 is shown from the user 105 positioned at the second distance 820.

The example of FIG. 8 illustrates a case in which there is one third party 107 other than the user 105 of the electronic device 101, but the present disclosure is not limited thereto. The present disclosure may also be applied to a case in which two or more third parties exist. As a non-limiting example, the at least one processor 210 may obtain information on the third parties and generate a patterned image 120 based on the information. For example, the information on the third parties may include a gaze direction (or eye position or direction) of each of the third parties, or a distance from each of the third parties. As a non-limiting example, the at least one processor 210 may generate the patterned image 120 based on the user 105 and the third party positioned at the closest distance among the third parties. As a non-limiting example, the at least one processor 210 may generate the patterned image 120, based on the third party whose gaze direction faces the electronic device 101 from among third parties whose gaze direction faces the electronic device 101 and third parties whose gaze direction does not face the electronic device 101, and the user 105. As a non-limiting example, the gaze direction and the distance may be identified by a trained model 215, as described below.

As a non-limiting example, the at least one processor 210 may provide the sensed data to the trained model 215. For example, the at least one processor 210 may obtain a distance to the external environment from the trained model 215. For example, the trained model 215 may identify (or generate), using the provided sensed data, a first distance 810 to the third party 107 and a second distance 820 to the user 105 within the external environment.

As described above, a case in which repeating patterns of a patterned image have uniform attributes is exemplified, but the present disclosure is not limited thereto. The at least one processor 210 (or the display driver circuitry 221) may generate attributes of a patterned image (e.g., color, intensity, interval (or repetition cycle) of repeating patterns) differently for each area of the patterned image. For example, the at least one processor 210 (or the display driver circuitry 221) may generate the patterned image by using an attribute of a first area among the areas of the patterned image as a first attribute, and an attribute of a second area among the areas of the patterned image distinct from the first area as a second attribute different from the first attribute. In the above example, a case in which the number of areas of the patterned image is 2 is described, but the present disclosure is not limited thereto.

In addition, as described above, although a case in which the size of the patterned image is the same as the size of the display area of the display panel 160 of the electronic device 101 is exemplified, the present disclosure is not limited thereto. For example, the patterned image may be applied (or overlaid) to a portion of the display area of the display panel 160 of the electronic device 101. For example, the portion may be determined to apply a privacy protection function to some contents (e.g., a visual object for password input) within an image including contents displayed on the display area of the display panel 160. As a non-limiting example, the portion may be identified by the trained model 215, by providing the image including the contents to the trained model 215.

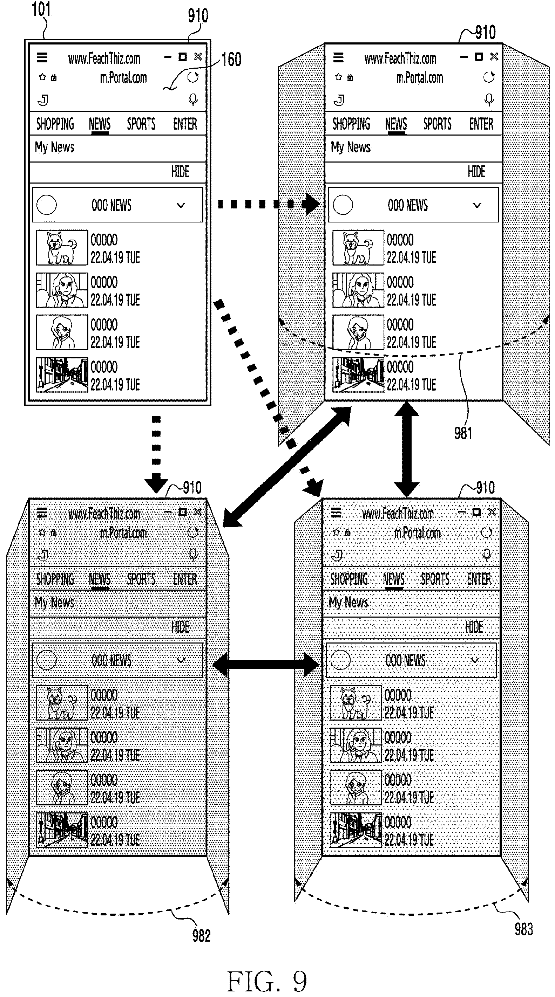

FIG. 9 illustrates an example of changing a viewing angle of a screen displayed on a display panel.

Referring to FIG. 9, the electronic device 101 may display a screen 910 on the display panel 160. The screen 910 may include one or more contents (or one or more media contents). The screen 910 may include one or more visual objects. The screen 910 may be displayed on the display panel 160 to provide information. The electronic device 101 of FIG. 9 may be an example of the electronic device 101 of FIG. 1 and the electronic device 101 of FIG. 2.

Display driver circuitry (e.g., the display driver circuitry 221 of FIG. 2 or the display driver IC 1530 of FIG. 15) may display a screen 910 having a viewing angle 981 on the display panel 160. The display panel 160 may be an example of the display panel 1560 of FIG. 15.

For example, the viewing angle 981 of the screen 910 may be wider than a viewing angle 982 of the screen 910 and a viewing angle 983 of the screen 910 described below. For example, the screen 910 having the viewing angle 981 may be displayed on the display panel 160 according to a normal display mode. For example, the viewing angle 981 may be wider than a first critical viewing angle and wider than a second critical viewing angle that is wider than the first critical viewing angle.

The electronic device 101 may provide a function (or feature) for user privacy with respect to the display on the display panel 160. For example, the electronic device 101 may provide one or more display modes that narrow a viewing angle of at least a portion of the screen 910 displayed on the display panel 160 for the function. For example, the function may be referred to as a privacy filter function, a privacy filter mode, a privacy display function, or a privacy function.

For example, the display panel 160 may include a display area (or active area) used for displaying a screen. A field of illumination (FOI) of light emitted from a portion of the display area may be different from a FOI of light emitted from another portion of the display area. The display panel 160 may provide one or more display modes (or a privacy filter function) by using different FOIs according to the display area.

For example, as described below, the display panel 160 may include a first layer including a translucent member (or black matrix) (or translucent material) including first light-transmitting portions and second light-transmitting portions smaller than the first light-transmitting portions. For example, the translucent member (or black matrix) may define the first light-transmitting portions and the second light-transmitting portions. For example, the translucent member of the first layer may include black matrix (BM) portions so that light emitted from the second sub-pixels is partially blocked by a portion of the BM portions defining the second light-transmitting portions. The display panel 160 may include a second layer, disposed below the first layer, including light-emitting elements (or light-emitting portions) disposed below each of the first light-transmitting portions, and light-emitting elements (or light-emitting portions) disposed below each of the second light-transmitting portions.

For example, the display panel 160 may include a first pixel including light-emitting elements in the second layer disposed below each of the first light-transmitting portions. For example, the first pixel may include sub-pixels (or first sub-pixels). The sub-pixels in the first pixel may include light-emitting elements in the first pixel disposed below each of the first light-transmitting portions. Each of the sub-pixels in the first pixel may include transistors configured to control light-emitting elements included in each of the sub-pixels in the first pixel. For example, the sub-pixels in the first pixel may be aligned with each of the first light-transmitting portions. For example, the sub-pixels in the first pixel may be positioned within each of the first light-transmitting portions when viewed on the display panel 160. For example, the sub-pixels in the first pixel may overlap each of the first light-transmitting portions. For example, each of the first light-transmitting portions may be overlying the sub-pixels in the first pixel.

For example, the display panel 160 may include a second pixel including light-emitting elements within the second layer each positioned below the second light-transmitting portions. The second pixel may be included within the display panel 160 for the privacy display mode. For example, the second pixel may include sub-pixels (or second sub-pixels). The sub-pixels within the second pixel may each include the light-emitting elements within the second pixel respectively positioned below the second light-transmitting portions. Each of the sub-pixels within the second pixel may include transistors configured to control light-emitting elements included within each of the sub-pixels within the second pixel. For example, the sub-pixels within the second pixel may be aligned with each of the second light-transmitting portions. For example, the sub-pixels within the second pixel may be positioned within each of the second light-transmitting portions when viewed on the display panel 160. For example, the sub-pixels within the second pixel may overlap each of the second light-transmitting portions. For example, each of the second light-transmitting portions may be overlying the sub-pixels within the second pixel.

For example, since the second light-transmitting portions are smaller than the first light-transmitting portions, the FOI of light emitted through the second pixel may be narrower than the FOI of light emitted through the first pixel.

The one or more display modes may include a first privacy display mode. For example, the electronic device 101 may display a screen 910 having a viewing angle 982, which is a first critical viewing angle, on the display panel 160, according to the first privacy display mode. The first privacy display mode may be changed or switched from the normal display mode. For example, the electronic device 101 may change displaying the screen 910 having the viewing angle 981 to displaying the screen 910 having the viewing angle 982, based on the first privacy display mode changed from the normal display mode. For example, based on changing the normal display mode to the first privacy display mode, the electronic device 101 may cease (or terminate) (or deactivate) displaying the screen 910 having the viewing angle 981 and display the screen 910 having the viewing angle 982. For example, based on the first privacy display mode changed from a second privacy display mode described below, the electronic device 101 may change displaying the screen 910 having the viewing angle 983 to displaying the screen 910 having the viewing angle 982. For example, based on changing the second privacy display mode to the first privacy display mode, the electronic device 101 can cease (or terminate) (or deactivate) displaying the screen 910 having the viewing angle 983 and display the screen 910 having the viewing angle 982. For example, based on changing the first privacy display mode to the normal display mode, the electronic device 101 may change displaying the screen 910 having the viewing angle 982 to displaying the screen 910 having the viewing angle 981. As a non-limiting example, the first threshold viewing angle may be described as the narrowest viewing angle that may be provided through the display panel 160.

The one or more display modes may include a second privacy display mode. For example, the electronic device 101 may display, on the display panel 160, a screen 910 having a viewing angle 983 wider than the first threshold viewing angle and narrower than the second threshold viewing angle, according to the second privacy display mode. The second privacy display mode may be described as an intermediate display mode between the normal display mode and the first privacy display mode. The second privacy display mode may be described as a display mode that adjusts a viewing angle of a screen displayed on the display panel 160 between the first threshold viewing angle and the second threshold viewing angle. For example, the electronic device 101 may change displaying the screen 910 having the viewing angle 981 to displaying the screen 910 having the viewing angle 983, based on the second privacy display mode changed from the normal display mode. For example, based on changing the normal display mode to the second privacy display mode, the electronic device 101 may cease (or terminate) (or deactivate) the display of the screen 910 having the viewing angle 981 and display the screen 910 having the viewing angle 983. For example, the electronic device 101 may change displaying the screen 910 having the viewing angle 982 to displaying the screen 910 having the viewing angle 983, based on the second privacy display mode changed from the first privacy display mode. For example, based on changing the first privacy display mode to the second privacy display mode, the electronic device 101 may cease (or terminate) (or deactivate) the display of the screen 910 having the viewing angle 982 and display the screen 910 having the viewing angle 983. For example, based on changing the second privacy display mode to the normal display mode, the electronic device 101 may change displaying the screen 910 having the viewing angle 983 to displaying the screen 910 having the viewing angle 981.

As a non-limiting example, the electronic device 101 may control the display panel 160 to emit light through a plurality of first pixels of the display panel 160 and to emit light through a plurality of second pixels of the display panel 160, in order to perform (or execute) a display on the display panel 160 according to the normal display mode. As a non-limiting example, the electronic device 101 may control the display panel 160 to refrain from emitting light through a plurality of first pixels of the display panel 160 and emit light through a plurality of second pixels of the display panel 160, in order to perform (or execute) a display on the display panel 160 according to the first privacy display mode. As a non-limiting example, the electronic device 101 may control the display panel 160 to emit light through a portion of the first pixels of the plurality of first pixels of the display panel 160 and emit light through a plurality of second pixels of the display panel 160, in order to perform (or execute) a display on the display panel 160 according to the second privacy display mode. For example, the second pixel may be used for all of the normal display mode, the first privacy display mode, and the second privacy display mode, relative to the first pixel used for the normal display mode.

As a non-limiting example, the first privacy display mode and the second privacy display mode may be replaced with a single privacy display mode (or a privacy display mode). For example, the single privacy display mode may be described as a mode that sets a viewing angle of the screen 910 displayed on the display panel 160 to a narrower viewing angle than the viewing angle 981. For example, the normal display mode may be described as a mode that deactivates a function for user privacy of the electronic device 101, and the single privacy display mode may be described as a mode that activates the function for user privacy of the electronic device 101. For example, the electronic device 101 may adjust (or change) a viewing angle of the screen 910 displayed on the display panel 160 between the first threshold viewing angle and the second threshold viewing angle, according to the single privacy display mode.

As a non-limiting example, within the privacy display mode, the electronic device 101 may not only adjust the viewing angle of the screen 910 (or image) of FIG. 9, but also concurrently display a patterned image superimposed on the screen 910 with the screen 910. For example, within the privacy display mode, the electronic device 101 may lower the visibility from the side by adjusting the viewing angle, and lower the visibility according to the distance from the front by displaying the patterned image. Accordingly, a probability of contents displayed on the display panel 160 of the electronic device 101 being exposed may be reduced.

Adjusting the viewing angle of the screen 910 to adjust the visibility from the side (or surrounding space) as described in the example of FIG. 9 may be performed according to a structure of the display panel 160 to be described in FIGS. 10 to 13 below.

FIG. 10 illustrates an example configuration of a display panel of an electronic device.

Referring to FIG. 10, the display panel 160 may include a plurality of pixels. For example, the display panel 160 may include first pixels 1010 and second pixels 1020. For example, the first pixels 1010 may include a pixel 1011 and a pixel 1012. For example, the second pixels 1020 may include a pixel 1021 and a pixel 1022. As a non-limiting example, the first pixels 1010 and the second pixels 1020 may alternate with each other. As a non-limiting example, the first pixels 1010 and the second pixels 1020 may be arranged in an interleaved arrangement.

Each of the pixels may include sub-pixels. The sub-pixels may include a first subpixel 1050-1 configured to emit light with a first color (e.g., red color), a second sub-pixel 1050-2 configured to emit light with a second color (e.g., green color), and a third sub-pixel 1050-3 configured to emit light with a third color (e.g., blue color). The sub-pixels may further include a fourth sub-pixel (not shown) configured to emit light with a fourth color (e.g., white color).

The field of illumination (FOI) of light emitted from one or more of the pixels may be wider than the FOI of light emitted from another one or more of the pixels. For example, the one or more of the pixels may include a pixel 1011 and pixel a 1012. For example, the other one or more of the pixels may include pixel a 1021 and pixel a 1022.

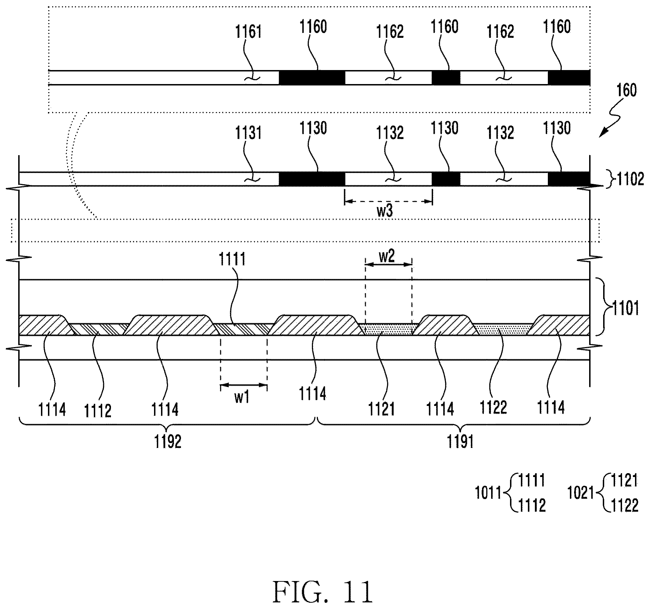

The display panel 160 may include a translucent member in another layer (e.g., the other layer 1102 of FIG. 11) of the display panel 160 disposed over a layer (e.g., the layer 1101 of FIG. 11) of the display panel 160 including the pixels in order to narrow (or reduce) the FOI of light emitted from the other one or more of the pixels compared to the FOI of light emitted from the one or more of the plurality of pixels. The translucent member in the other layer of the display panel 160 may be a structure for narrowing a viewing angle of at least a portion of a screen (e.g., the screen 910) displayed on the display panel 160. The translucent member in the other layer of the display panel 160 may be partially overlying the one or more of the pixels and may not be overlying the other one or more of the pixels. The translucent member disposed within the other layer of the display panel 160 according to the example configuration of FIG. 10 is described in more detail with reference to FIG. 11.

FIG. 11 is a cross-sectional view of a display panel according to the example configuration of FIG. 10.

Referring to FIG. 11, the display panel 160 may include a layer 1101 and another layer 1102 disposed (or positioned) on the layer 1101. The layer 1101 of the display panel 160 may be described as a light-emitting layer 1101. The other layer 1102 of the display panel 160 may be described as a masking layer 1102 (or mask layer 1102) (or black matrix layer 1102).

The layer 1101 of the display panel 160 may include a pixel 1011 positioned within an area 1191 and a pixel 1021 positioned within an area 1192. The pixel 1011 may include a sub-pixel 1111 and a sub-pixel 1112. The pixel 1021 may include a sub-pixel 1121 and a subpixel 1122.

The layer 1101 of the display panel 160 may include a pixel definition layer (PDL) 1141. The PDL 1141 may define a periphery of the pixel 1011 and a periphery of the pixel 1021. The PDL 1141 may define a periphery of the sub-pixel 1111 within the pixel 1011 and a periphery of the sub-pixel 1112 within the pixel 1011. The PDL 1141 may define a periphery of the sub-pixel 1121 within the pixel 1021 and a periphery of the sub-pixel 1122 within a pixel 1021. For example, PDL 1141 may be positioned between the pixel 1011 and the pixel 1021, between the sub-pixel 1111 and the sub-pixel 1112, and between the sub-pixel 1121 and the sub-pixel 1122.

As a non-limiting example, a width w1 of the sub-pixel 1111 defined by the PDL 1141 may be equal to a width w2 of the sub-pixel 1121 defined by the PDL 1141. For example, when a color of light emitted from the sub-pixel 1111 is equal to as a color of light emitted from the sub-pixel 1121, the width w1 of the sub-pixel 1111 may be equal to the width w2 of the sub-pixel 1121. When the color of light emitted from the sub-pixel 1111 is different from the color of the light emitted from the sub-pixel 1121, the width w1 of the sub-pixel 1111 may be narrower than the width w2 of the sub-pixel 1121. As a non-limiting example, the width w1 of the sub-pixel 1111 defined by the PDL 1141 may be wider than the width w2 of the sub-pixel 1121 defined by the PDL 1141. For example, when the color of light emitted from the subpixel 1111 is equal to the color of light emitted from the sub-pixel 1121, the width w1 of the sub-pixel 1111 may be equal to the width w2 of the sub-pixel 1121.

The other layer 1102 of the display panel 160 may include a translucent member 1130 (or black matrix 1130). The translucent member 1130 may be included in the other layer 1102 of the display panel 160 for the privacy display mode. For example, the translucent member 1130 may be partially overlying the pixel 1021, but may not be overlying the pixel 1011, in order to narrow the FOI of light emitted from the pixel 1021 to that of light emitted from the pixel 1011. For example, the translucent member 1130 may partially overlap the pixel 1021 among the pixel 1011 and the pixel 1021. For example, the translucent element 1130 may be positioned above (or over) a portion of the PDL 1141 that defines the pixel 1021 and sub-pixels (e.g., the sub-pixel 1121 and the sub-pixel 1122) within the pixel 1021, and may not be positioned above another portion of the PDL 1141 that defines the pixel 1011 and sub-pixels (e.g., the sub-pixel 1111 and the sub-pixel 1112) within the pixel 1011. For example, the translucent member 1130 may include an opening 1131 (or first light-transmitting portion 1131) (or first light-transmitting area 1131) positioned over the pixel 1011 and openings 1132 (or second light-transmitting portions 1132) (or second light-transmitting areas 1132) positioned over the pixel 1021. The opening 1131 may be aligned with the pixel 1011. The opening 1131 may overlap sub-pixels within the pixel 1011. The opening 1131 may surround sub-pixels within the pixel 1011 when the display panel 160 is viewed from above. The sub-pixels within pixel 1011 may be positioned within the opening 1131 when the display panel 160 is viewed from above. The opening 1132 may be aligned with sub-pixels within the pixel 1021, respectively. The opening 1132 may overlap sub-pixels within the pixel 1021, respectively. The opening 1132 may surround sub-pixels within the pixel 1021, respectively, when the display panel 160 is viewed from above. The sub-pixels within the pixel 1021 may be positioned within the opening 1132, respectively, when the display panel 160 is viewed from above.

For example, a size of the opening 1131 may be larger than a size of each of the openings 1132. For example, the sub-pixels (e.g., the sub-pixel 1111 and the sub-pixel 1112) within the pixel 1011 may be positioned below the opening 1131 (or the first light-transmitting portion 1131). For example, each of the sub-pixels (e.g., the sub-pixel 1121 and the sub-pixel 1122) within the pixel 1021 may be positioned below each of the openings 1132 (or the second light-transmitting portion 1132). The sub-pixels within the pixel 1011 may be described as first sub-pixels disposed below a light-transmitting portion (e.g., the first light-transmitting portion 1131) within the other layer 1102, and the sub-pixels within the pixel 1021 may be described as second sub-pixels respectively disposed below other light-transmitting portions (e.g., the second light-transmitting portions 1132) within the other layer 1102 smaller than the light-transmitting portion (e.g., the first light-transmitting portion 1131) within the other layer 1102.

As a non-limiting example, a width w3 of an opening from among the openings 1132 may be equal to a width w2 of the sub-pixel 1121. As a non-limiting example, the width w3 of the opening from among the openings 1132 may be wider than the width w2 of the sub-pixel 1121. As a non-limiting example, the width w3 of the opening from among the openings 1132 may be narrower than the width w2 of the sub-pixel 1121.

As a non-limiting example, the display panel 160 may further include at least one layer disposed between the layer 1101 and the other layer 1102.

For example, the at least one layer may include a color filter layer (not shown). The color filter layer may include a translucent member 1160 including translucent portions positioned between the PDL 1141 and the translucent member 1130. For example, the translucent member 1160 included in the color filter layer of the display panel 160 may include (or define) an opening 1161 (or light-transmitting portion 1161) corresponding to the opening 1131 and openings 1162 (or light-transmitting portions 1162) each corresponding to the openings 1132. The translucent member 1160 defining the opening 1161 and the openings 1162 may be included within the display panel 160 to guide light emitted (or transmitted) toward each of the openings 1132. For example, light from the sub-pixel 1121 may be emitted (or transmitted) to an opening aligned with the sub-pixel 1121 among the openings 1132 by the translucent member 1160. For example, light from the sub-pixel 1122 may be emitted (or transmitted) to an opening aligned with the sub-pixel 1122 among the openings 1132 by the translucent member 1160. The color filter layer may be disposed over (or on, or above) a touch layer between the layer 1101 and the other layer 1102. The touch layer may be used to identify a touch input on the display panel 160.

For example, the at least one layer may include a layer disposed on the color filter layer. The layer disposed on the color filter layer may include the translucent member 1160 including translucent portions positioned between the PDL 1141 and the translucent member 1130. For example, the translucent member 1160 included in the layer of the display panel 160 disposed on the color filter layer of the display panel 160 may include the opening 1161 (or light-transmitting portion 1161) corresponding to the opening 1131 and the openings 1162 (or light-transmitting portions 1162) respectively corresponding to the openings 1132. The translucent member 1160 defining the opening 1161 and the openings 1162 may be included in the display panel 160 to guide light emitted (or transmitted) toward each of the openings 1132. For example, light from the sub-pixel 1121 may be emitted (or transmitted) to an opening aligned with the sub-pixel 1121 among the openings 1132 by the translucent member 1160. For example, light from the sub-pixel 1122 may be emitted (or transmitted) to an opening aligned with the sub-pixel 1122 among the openings 1132 by the translucent member 1160. The color filter layer may be disposed between the layer including the translucent member 1160 and the touch layer. The touch layer may be used to identify a touch input on the display panel 160.

The at least one layer may include an additional translucent member 1160 other than the translucent member 1130 of the other layer 1102. Accordingly, a double black matrix (BM) structure in which a translucent member is formed in a plurality of layers may be formed. In the example of FIG. 11, the width (or diameter), size, and position (or arrangement) of the translucent member 1130 and the translucent member 1160 may be identical to each other. For example, each of openings 1161 and 462 defined by the translucent member 1160 may be substantially identical to each of the openings 1131 and 1132 of the other layer 1102. However, the present disclosure is not limited thereto. For example, each of the openings 1161 and 462 defined by the translucent member 1160 may be different from the opening 1131 and the openings 1132 corresponding to each of openings. The width (or diameter), size, and central axis position (or alignment position) of a light-emitting portion (e.g., the sub-pixel 1111, the sub-pixel 1112, the sub-pixel 1121, and the sub-pixel 1122) of the layer 1101 of the opening 1131 and the openings 1132 of the other layer 1102 and may be different from the width (or diameter), size, and central axis position of the openings 1161 and 462 of the translucent member 1160 included in the at least one layer.

The at least one layer may include the color filter layer including the translucent member 1160 and still another layer including the translucent member 1160. As a non-limiting example, the width (or diameter), size, and position (or arrangement) of the translucent member 1160 of the color filter layer, the translucent member 1160 of the still another layer, and the translucent member 1130 of the other layer 1102 may be equal to each other. As a non-limiting example, the width (or diameter), size, and position (or arrangement) of translucent member of two layers from among the translucent member 1160 of the color filter layer, the translucent member 1160 of the still another layer, and the translucent member 1130 of the other layer 1102 may be identical to each other, and the width (or diameter), size, and position (or arrangement) of translucent member of a remaining layer may be different from the width (or diameter), size, and position (or arrangement) of the translucent member of the two layers.

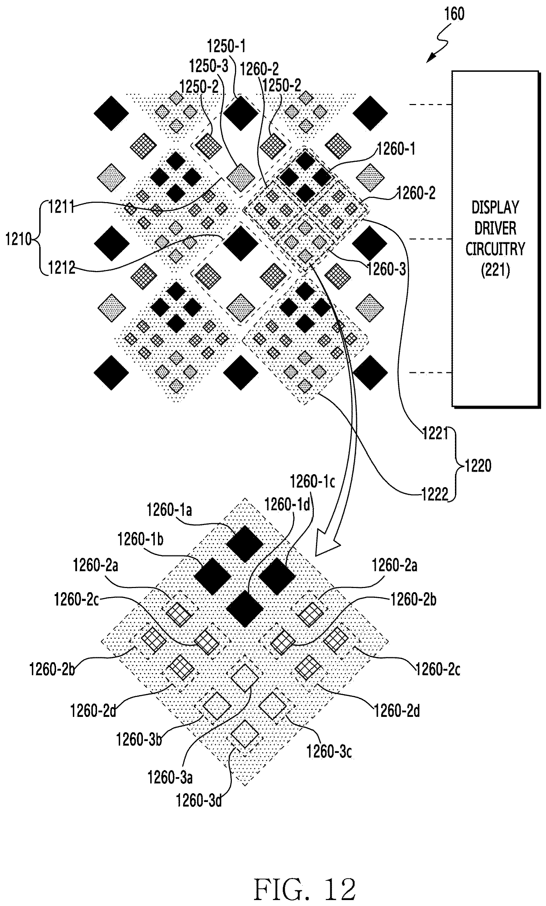

FIG. 12 illustrates another example configuration of a display panel of an electronic device.

Referring to FIG. 12, the display panel 160 may include a plurality of pixels. For example, the display panel 160 may include first pixels 1210 and second pixels 1220. For example, the first pixels 1210 may include a pixel 1211 and a pixel 1212. For example, the second pixels 1220 may include a pixel 1221 and a pixel 1222. As a non-limiting example, the first pixels 1210 and the second pixels 1220 may alternate with each other. As a non-limiting example, the first pixels 1210 and the second pixels 1220 may be arranged in an interleaved arrangement.

The first pixels 1210 may include sub-pixels. The sub-pixels may include a first subpixel 1250-1 configured to emit light with a first color (e.g., red color), a second sub-pixel 1250-2 configured to emit light with a second color (e.g., green color), and a third sub-pixel 1250-3 configured to emit light with a third color (e.g., blue color). The sub-pixels may further include a fourth sub-pixel (not shown) configured to emit light with a fourth color (e.g., white color).

The second pixels 1220 may include sub-pixels. The sub-pixels may include a first sub-pixel 1260-1 configured to emit light with a first color (e.g., red color), a second sub-pixel 1260-2 configured to emit light with a second color (e.g., green color), and a third sub-pixel 1260-3 configured to emit light with a third color (e.g., blue color). The sub-pixels may further include a fourth sub-pixel (not shown) configured to emit light with a fourth color (e.g., white color).

Each of the sub-pixels within each of the second pixels 1220 may include portions that are spaced apart from each other. For example, the first sub-pixel 1260-1 may include a first portion 1260-1a of the first sub-pixel 1260-1, a second portion 1260-1b of the first subpixel 1260-1, a third portion 1260-1c of the first sub-pixel 1260-1, and a fourth portion 1260-1d of the first sub-pixel 1260-1. The first portion 1260-1a of the first sub-pixel 1260-1, the second portion 1260-1b of the first sub-pixel 1260-1, the third portion 1260-1c of the first subpixel 1260-1, and the fourth portion 1260-1d of the first sub-pixel 1260-1 may be spaced apart from each other. The first portion 1260-1a of the first sub-pixel 1260-1, the second portion 1260-1b of the first sub-pixel 1260-1, the third portion 1260-1c of the first sub-pixel 1260-1, and the fourth portion 1260-1d of the first sub-pixel 1260-1 may be described as micropixels of the first sub-pixel 1260-1. For example, the second sub-pixel 1260-2 may include a first portion 1260-2a of the second sub-pixel 1260-2, a second portion 1260-2b of the second subpixel 1260-2, a third portion 1260-2c of the second sub-pixel 1260-2, and a fourth portion 1260-2d of the second sub-pixel 1260-2. The first portion 1260-2a of the second sub-pixel 1260-2, the second portion 1260-2b of the second sub-pixel 1260-2, the third portion 1260-2c of the second sub-pixel 1260-2, and the fourth portion 1260-2d of the second sub-pixel 1260-2 may be spaced apart from each other. For example, the first portion 1260-2a of the second sub-pixel 1260-2, the second portion 1260-2b of the second sub-pixel 1260-2, the third portion 1260-2c of the second sub-pixel 1260-2, and the fourth portion 1260-2d of the second sub-pixel 1260-2 may be described as micropixels of the second sub-pixel 1260-2. For example, the third subpixel 1260-3 may include a first portion 1260-3a of the third sub-pixel 1260-3, a second portion 1260-3b of the third sub-pixel 1260-3, a third portion 1260-3c of the third sub-pixel 1260-3, and a fourth portion 1260-3d of the third sub-pixel 1260-3. The first portion 1260-3a of the third sub-pixel 1260-3, the second portion 1260-3b of the third sub-pixel 1260-3, the third portion 1260-3c of the third sub-pixel 1260-3, and the fourth portion 1260-3d of the third subpixel 1260-3 may be spaced apart from each other. For example, the first portion 1260-3a of the third sub-pixel 1260-3, the second portion 1260-3b of the third sub-pixel 1260-3, the third portion 1260-3c of the third sub-pixel 1260-3, and the fourth portion 1260-3d of the third subpixel 1260-3 may be described as micropixels of the third sub-pixel 1260-3.

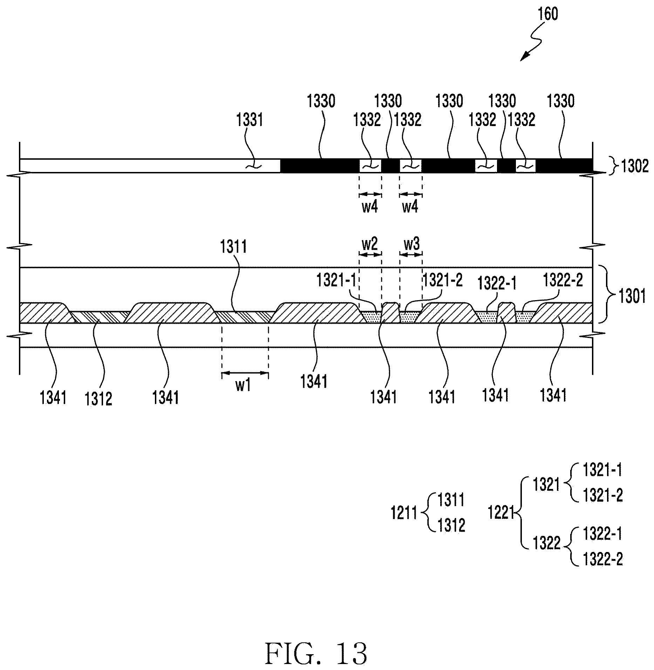

For example, the FOI of light emitted from the second pixels 1220 may be narrower than the FOI of light emitted from the first pixels 1210. For example, in order to narrow (or reduce) the FOI of light emitted from the second pixels 1220 compared to the FOI of light emitted from the first pixels 1210, the layer of the display panel 160 including the pixels may include a PDL further defining the micropixels of the first sub-pixel 1260-1, the micropixels of the second sub-pixel 1260-2, and the micropixels of the third sub-pixel 1260-3. For example, in order to narrow (or reduce) the FOI of light emitted from the second pixels 1220 compared to the FOI of light emitted from the first pixels 1210, another layer (e.g., the other layer 1302 of FIG. 13) of the display panel 160 disposed over the layer (e.g., the layer 1301 of FIG. 13) of the display panel 160 including the pixels may include a translucent member. The translucent member in the other layer of the display panel 160 may be partially overlying one or more of the plurality of pixels and may not be overlying the other or more of the plurality of pixels. The PDL within the layer of the display panel 160 and the translucent member within the other layer of the display panel 160 may be structures for narrowing a viewing angle of at least a portion of a screen (e.g., the screen 910) displayed on the display panel 160. The translucent member disposed within the other layer of the display panel 160 according to the example configuration of FIG. 12 is described in more detail with reference to FIG. 13.

FIG. 13 is a cross-sectional view of a display panel according to the example configuration of FIG. 12.

Referring to FIG. 13, the display panel 160 may include a layer 1301 and another layer 1302 disposed (or positioned) on the layer 1301. The layer 1301 of the display panel 160 may be described as a light-emitting layer 1301. The other layer 1302 of the display panel 160 may be described as a masking layer 1302 (or mask layer 1302) (or black matrix layer 1302).

The layer 1301 of the display panel 160 may include first pixels 1210 and second pixels 1220. The first pixels 1210 may include a pixel 1211. The pixel 1211 may include a sub-pixel 1311 and a sub-pixel 1312. The second pixels 1220 may include a pixel 1221. The pixel 1221 may include a sub-pixel 1321 and a sub-pixel 1322. The sub-pixel 1321 may include a first portion 1321-1 of the sub-pixel 1321 and a second portion 1321-2 of the sub-pixel 1321. The sub-pixel 1322 may include a first portion 1322-1 of the sub-pixel 1322 and a second portion 1322-2 of the sub-pixel 1322.

The Layer 1301 of the display panel 160 may include a pixel definition layer (PDL) 1341. The PDL 1341 may define a periphery of the pixel 1211 and a periphery of the pixel 1221. The PDL 1341 may define a periphery of the sub-pixel 1311 within the pixel 1211 and a periphery of the sub-pixel 1312 within the pixel 1211. The PDL 1341 may define a periphery of the sub-pixel 1321 within the pixel 1221 and the periphery of the sub-pixel 1322 within the pixel 1221. PDL 1341 may further define a periphery of the first portion 1321-1 of the subpixel 1321 and a periphery of the second portion 1321-2 of the sub-pixel 1321 relative to a PDL 441 (e.g., the PDL 441 of FIG. 4). The PDL 1341 may further define a periphery of the first portion 1322-1 of the sub-pixel 1322 and a periphery of the second portion 1322-2 of the subpixel 1322 relative to a PDL 441 (e.g., the PDL 441 of FIG. 4). For example, the PDL 1341 may be disposed between the pixel 1211 and the pixel 1221, between the sub-pixel 1311 and the sub-pixel 1312, between the sub-pixel 1321 and the sub-pixel 1322, between the first portion 1321-1 of the sub-pixel 1321 and the second portion 1321-2 of the sub-pixel 1321, and between the first portion 1322-1 of the sub-pixel 1322 and the second portion 1322-2 of the sub-pixel 1322.

As a non-limiting example, a width w1 of the sub-pixel 1311 defined by the PDL 1341 may be wider than a width w2 of the first portion 1321-1 of the sub-pixel 1321 defined by the PDL 1341 and a width w3 of the second portion 1321-2 of the sub-pixel 1321 defined by the PDL 1341.

The other layer 1302 of the display panel 160 may include a translucent member 1330 (or black matrix 1330). The translucent member 1330 may be included within the other layer 1302 of the display panel 160 for the privacy display mode. For example, the translucent member 1330 may be partially overlying the pixel 1221 and may not be overlying the pixel 1211, in order to narrow the FOI of light emitted from pixel 1221 to the FOI of light emitted from pixel 1211. For example, the translucent member 1330 may partially overlap the pixel 1221 among the pixel 1211 and the pixel 1221. For example, the translucent member 1330 may be positioned above (or over) a portion of the PDL 1341 defining the pixel 1221 and sub-pixels (e.g., the sub-pixel 1321 and the sub-pixel 1322) within the pixel 1221, and may not be positioned above another portion of the PDL 1341 defining the pixel 1211 and sub-pixels (e.g., the sub-pixel 1311 and the sub-pixel 1312) within the pixel 1211. For example, the translucent member 1330 may be further positioned over a portion of the PDL 1341 defining the first portion 1321-1 of the sub-pixel 1321 and the second portion 1321-2 of the sub-pixel 1321 and a portion of the PDL 1341 defining the first portion 1322-1 of the sub-pixel 1322 and the second portion 1322-2 of the sub-pixel 1322, relative to the translucent element 1130 (e.g., the translucent element 1130 of FIG. 11).

For example, the translucent member 1330 may include an opening 1331 (or light-transmitting portion 1331) positioned over the pixel 1211 and openings 1332 (or light-transmitting portion 1332) positioned over the pixel 1221. For example, a size of the opening 1331 may be larger than a size of each of the openings 1332. The sub-pixels within the pixel 1211 may be described as first sub-pixels positioned below a light-transmitting portion (e.g., the first light-transmitting portion 1331) within the other layer 1302, and the sub-pixels within the pixel 1221 may be described as second sub-pixels respectively positioned below other light-transmitting portions (e.g., the second light-transmitting portions 1332) within the other layer 1302 smaller than the light-transmitting portion (e.g., the first light-transmitting portion 1331) within the other layer 1302.

As a non-limiting example, a width w4 of an opening from among the openings 1332 may be equal to the width w2 of the first portion 1321-1 of the sub-pixel 1321 (or the width w3 of the second portion 1321-2 of the sub-pixel 1321). As a non-limiting example, the width w4 of an opening of the openings 1332 may be wider than the width w2 of the first portion 1321-1 of the sub-pixel 1321 (or the width w3 of the second portion 1321-2 of the sub-pixel 1321). As a non-limiting example, the width w4 of an opening of the openings 1332 may be narrower than the width w2 of the first portion 1321-1 of the sub-pixel 1321 (or the width w3 of the second portion 1321-2 of the sub-pixel 1321).

The operations described above may be performed by the electronic device 1401 in FIG. 14.

FIG. 14 is a block diagram illustrating an electronic device 1401 in a network environment 1400 according to various embodiments.

Referring to FIG. 14, the electronic device 1401 in the network environment 1400 may communicate with an electronic device 1402 via a first network 1498 (e.g., a short-range wireless communication network), or at least one of an electronic device 1404 or a server 1408 via a second network 1499 (e.g., a long-range wireless communication network). According to an embodiment, the electronic device 1401 may communicate with the electronic device 1404 via the server 1408. According to an embodiment, the electronic device 1401 may include a processor 1420, memory 1430, an input module 1450, a sound output module 1455, a display module 1460, an audio module 1470, a sensor module 1476, an interface 1477, a connecting terminal 1478, a haptic module 1479, a camera module 1480, a power management module 1488, a battery 1489, a communication module 1490, a subscriber identification module(SIM) 1496, or an antenna module 1497. In some embodiments, at least one of the components (e.g., the connecting terminal 1478) may be omitted from the electronic device 1401, or one or more other components may be added in the electronic device 1401. In some embodiments, some of the components (e.g., the sensor module 1476, the camera module 1480, or the antenna module 1497) may be implemented as a single component (e.g., the display module 1460).

The processor 1420 may execute, for example, software (e.g., a program 1440) to control at least one other component (e.g., a hardware or software component) of the electronic device 1401 coupled with the processor 1420, and may perform various data processing or computation. According to an embodiment, as at least part of the data processing or computation, the processor 1420 may store a command or data received from another component (e.g., the sensor module 1476 or the communication module 1490) in volatile memory 1432, process the command or the data stored in the volatile memory 1432, and store resulting data in non-volatile memory 1434. According to an embodiment, the processor 1420 may include a main processor 1421 (e.g., a central processing unit (CPU) or an application processor (AP)), or an auxiliary processor 1423 (e.g., a graphics processing unit (GPU), a neural processing unit (NPU), an image signal processor (ISP), a sensor hub processor, or a communication processor (CP)) that is operable independently from, or in conjunction with, the main processor 1421. For example, when the electronic device 1401 includes the main processor 1421 and the auxiliary processor 1423, the auxiliary processor 1423 may be adapted to consume less power than the main processor 1421, or to be specific to a specified function. The auxiliary processor 1423 may be implemented as separate from, or as part of the main processor 1421.

The auxiliary processor 1423 may control at least some of functions or states related to at least one component (e.g., the display module 1460, the sensor module 1476, or the communication module 1490) among the components of the electronic device 1401, instead of the main processor 1421 while the main processor 1421 is in an inactive (e.g., sleep) state, or together with the main processor 1421 while the main processor 1421 is in an active state (e.g., executing an application). According to an embodiment, the auxiliary processor 1423 (e.g., an image signal processor or a communication processor) may be implemented as part of another component (e.g., the camera module 1480 or the communication module 1490) functionally related to the auxiliary processor 1423. According to an embodiment, the auxiliary processor 1423 (e.g., the neural processing unit) may include a hardware structure specified for artificial intelligence model processing. An artificial intelligence model may be generated by machine learning. Such learning may be performed, e.g., by the electronic device 1401 where the artificial intelligence is performed or via a separate server (e.g., the server 1408). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1430 may store various data used by at least one component (e.g., the processor 1420 or the sensor module 1476) of the electronic device 1401. The various data may include, for example, software (e.g., the program 1440) and input data or output data for a command related thereto. The memory 1430 may include the volatile memory 1432 or the non-volatile memory 1434.

The program 1440 may be stored in the memory 1430 as software, and may include, for example, an operating system (OS) 1442, middleware 1444, or an application 1446.

The input module 1450 may receive a command or data to be used by another component (e.g., the processor 1420) of the electronic device 1401, from the outside (e.g., a user) of the electronic device 1401. The input module 1450 may include, for example, a microphone, a mouse, a keyboard, a key (e.g., a button), or a digital pen (e.g., a stylus pen).

The sound output module 1455 may output sound signals to the outside of the electronic device 1401. The sound output module 1455 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1460 may visually provide information to the outside (e.g., a user) of the electronic device 1401. The display module 1460 may include, for example, a display, a hologram device, or a projector and control circuitry to control a corresponding one of the display, hologram device, and projector. According to an embodiment, the display module 1460 may include a touch sensor adapted to detect a touch, or a pressure sensor adapted to measure the intensity of force incurred by the touch.

The audio module 1470 may convert a sound into an electrical signal and vice versa. According to an embodiment, the audio module 1470 may obtain the sound via the input module 1450, or output the sound via the sound output module 1455 or a headphone of an external electronic device (e.g., an electronic device 1402) directly (e.g., wiredly) or wirelessly coupled with the electronic device 1401.

The sensor module 1476 may detect an operational state (e.g., power or temperature) of the electronic device 1401 or an environmental state (e.g., a state of a user) external to the electronic device 1401, and then generate an electrical signal or data value corresponding to the detected state. According to an embodiment, the sensor module 1476 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1477 may support one or more specified protocols to be used for the electronic device 1401 to be coupled with the external electronic device (e.g., the electronic device 1402) directly (e.g., wiredly) or wirelessly. According to an embodiment, the interface 1477 may include, for example, a high definition multimedia interface (HDMI), a universal serial bus (USB) interface, a secure digital (SD) card interface, or an audio interface.

A connecting terminal 1478 may include a connector via which the electronic device 1401 may be physically connected with the external electronic device (e.g., the electronic device 1402). According to an embodiment, the connecting terminal 1478 may include, for example, an HDMI connector, a USB connector, a SD card connector, or an audio connector (e.g., a headphone connector).

The haptic module 1479 may convert an electrical signal into a mechanical stimulus (e.g., a vibration or a movement) or electrical stimulus which may be recognized by a user via his tactile sensation or kinesthetic sensation. According to an embodiment, the haptic module 1479 may include, for example, a motor, a piezoelectric element, or an electric stimulator.

The camera module 1480 may capture a still image or moving images. According to an embodiment, the camera module 1480 may include one or more lenses, image sensors, image signal processors, or flashes.

The power management module 1488 may manage power supplied to the electronic device 1401. According to an embodiment, the power management module 1488 may be implemented as at least part of, for example, a power management integrated circuit (PMIC).

The battery 1489 may supply power to at least one component of the electronic device 1401. According to an embodiment, the battery 1489 may include, for example, a primary cell which is not rechargeable, a secondary cell which is rechargeable, or a fuel cell.

The communication module 1490 may support establishing a direct (e.g., wired) communication channel or a wireless communication channel between the electronic device 1401 and the external electronic device (e.g., the electronic device 1402, the electronic device 1404, or the server 1408) and performing communication via the established communication channel. The communication module 1490 may include one or more communication processors that are operable independently from the processor 1420 (e.g., the application processor (AP)) and supports a direct (e.g., wired) communication or a wireless communication. According to an embodiment, the communication module 1490 may include a wireless communication module 1492 (e.g., a cellular communication module, a short-range wireless communication module, or a global navigation satellite system (GNSS) communication module) or a wired communication module 1494 (e.g., a local area network (LAN) communication module or a power line communication (PLC) module). A corresponding one of these communication modules may communicate with the external electronic device via the first network 1498 (e.g., a short-range communication network, such as Bluetooth^{™}, wirelessfidelity (Wi-Fi) direct, or infrared data association (IrDA)) or the second network 1499 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1492 may identify and authenticate the electronic device 1401 in a communication network, such as the first network 1498 or the second network 1499, using subscriber information (e.g., international mobile subscriber identity (IMSI)) stored in the subscriber identification module 1496.

The wireless communication module 1492 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1492 may support a high-frequency band (e.g., the mmWave band) to achieve, e.g., a high data transmission rate. The wireless communication module 1492 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1492 may support various requirements specified in the electronic device 1401, an external electronic device (e.g., the electronic device 1404), or a network system (e.g., the second network 1499). According to an embodiment, the wireless communication module 1492 may support a peak data rate (e.g., 20Gbps or more) for implementing eMBB, loss coverage (e.g., 1464dB or less) for implementing mMTC, or U-plane latency (e.g., 0.5ms or less for each of downlink (DL) and uplink (UL), or a round trip of 14ms or less) for implementing URLLC.

The antenna module 1497 may transmit or receive a signal or power to or from the outside (e.g., the external electronic device) of the electronic device 1401. According to an embodiment, the antenna module 1497 may include an antenna including a radiating element composed of a conductive material or a conductive pattern formed in or on a substrate (e.g., a printed circuit board (PCB)). According to an embodiment, the antenna module 1497 may include a plurality of antennas (e.g., array antennas). In such a case, at least one antenna appropriate for a communication scheme used in the communication network, such as the first network 1498 or the second network 1499, may be selected, for example, by the communication module 1490 (e.g., the wireless communication module 1492) from the plurality of antennas. The signal or the power may then be transmitted or received between the communication module 1490 and the external electronic device via the selected at least one antenna. According to an embodiment, another component (e.g., a radio frequency integrated circuit (RFIC)) other than the radiating element may be additionally formed as part of the antenna module 1497.

According to various embodiments, the antenna module 1497 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1401 and the external electronic device 1404 via the server 1408 coupled with the second network 1499. Each of the electronic devices 1402 or 1404 may be a device of a same type as, or a different type, from the electronic device 1401. According to an embodiment, all or some of operations to be executed at the electronic device 1401 may be executed at one or more of the external electronic devices 1402, 1404, or 1408. For example, if the electronic device 1401 should perform a function or a service automatically, or in response to a request from a user or another device, the electronic device 1401, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1401. The electronic device 1401 may provide the outcome, with or without further processing of the outcome, as at least part of a reply to the request. To that end, a cloud computing, distributed computing, mobile edge computing (MEC), or client-server computing technology may be used, for example. The electronic device 1401 may provide ultra low-latency services using, e.g., distributed computing or mobile edge computing. In another embodiment, the external electronic device 1404 may include an internet-of-things (IoT) device. The server 1408 may be an intelligent server using machine learning and/or a neural network. According to an embodiment, the external electronic device 1404 or the server 1408 may be included in the second network 1499. The electronic device 1401 may be applied to intelligent services (e.g., smart home, smart city, smart car, or healthcare) based on 5G communication technology or IoT-related technology.

FIG. 15 is a block diagram 1500 illustrating the display module 1460 according to various embodiments.

Referring to FIG. 15, the display module 1460 may include a display 1510 and a display driver integrated circuit (DDI) 1530 to control the display 1510. The DDI 1530 may include an interface module 1531, memory 1533 (e.g., buffer memory), an image processing module 1535, or a mapping module 1537. The DDI 1530 may receive image information that contains image data or an image control signal corresponding to a command to control the image data from another component of the electronic device 1401 via the interface module 1531. For example, according to an embodiment, the image information may be received from the processor 1420 (e.g., the main processor 1421 (e.g., an application processor)) or the auxiliary processor 1423 (e.g., a graphics processing unit) operated independently from the function of the main processor 1421. The DDI 1530 may communicate, for example, with touch circuitry 1550 or the sensor module 1476 via the interface module 1531. The DDI 1530 may also store at least part of the received image information in the memory 1533, for example, on a frame by frame basis. The image processing module 1535 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 1510. The mapping module 1537 may generate a voltage value or a current value corresponding to the image data pre-processed or postprocessed by the image processing module 1535. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 1510 may be driven, for example, based at least in part on the voltage value or the current value such that visual information (e.g., a text, an image, or an icon) corresponding to the image data may be displayed via the display 1510.

According to an embodiment, the display module 1460 may further include the touch circuitry 1550. The touch circuitry 1550 may include a touch sensor 1551 and a touch sensor IC 1553 to control the touch sensor 1551. The touch sensor IC 1553 may control the touch sensor 1551 to sense a touch input or a hovering input with respect to a certain position on the display 1510. To achieve this, for example, the touch sensor 1551 may detect (e.g., measure) a change in a signal (e.g., a voltage, a quantity of light, a resistance, or a quantity of one or more electric charges) corresponding to the certain position on the display 1510. The touch circuitry 1550 may provide input information (e.g., a position, an area, a pressure, or a time) indicative of the touch input or the hovering input detected via the touch sensor 1551 to the processor 1420. According to an embodiment, at least part (e.g., the touch sensor IC 1553) of the touch circuitry 1550 may be formed as part of the display 1510 or the DDI 1530, or as part of another component (e.g., the auxiliary processor 1423) disposed outside the display module 1460.

According to an embodiment, the display module 1460 may further include at least one sensor (e.g., a fingerprint sensor, an iris sensor, a pressure sensor, or an illuminance sensor) of the sensor module 1476 or a control circuit for the at least one sensor. In such a case, the at least one sensor or the control circuit for the at least one sensor may be embedded in one portion of a component (e.g., the display 1510, the DDI 1530, or the touch circuitry 1550)) of the display module 1460. For example, when the sensor module 1476 embedded in the display module 1460 includes a biometric sensor (e.g., a fingerprint sensor), the biometric sensor may obtain biometric information (e.g., a fingerprint image) corresponding to a touch input received via a portion of the display 1510. As another example, when the sensor module 1476 embedded in the display module 1460 includes a pressure sensor, the pressure sensor may obtain pressure information corresponding to a touch input received via a partial or whole area of the display 1510. According to an embodiment, the touch sensor 1551 or the sensor module 1476 may be disposed between pixels in a pixel layer of the display 1510, or over or under the pixel layer.

FIG. 16 illustrates an example of an exemplary rollable electronic device.

Referring to FIG. 16, the electronic device 101 may include a display 1630, a first housing 1610, and/or a second housing 1620. The electronic device 101 of FIG. 16 may indicate an example of the electronic device 101 of FIG. 1 or the electronic device 101 of FIG. 2. For example, the display 1630 of FIG. 16 may include the display panel 160 of the electronic device 101.

For example, the first housing 1610 may be referred to as a first housing part. The second housing 1620 may be referred to as a second housing part. For example, the electronic device 101 may include a housing including the first housing part and the second housing part.

According to an embodiment, the first housing 1610 may accommodate at least a portion of the second housing 1620. The first housing 1610 may cover (or surround) at least a portion of the second housing 1620.

According to an embodiment, the second housing 1620 may be movable relative to the first housing 1610. The second housing 1620 may be movable linearly relative to the first housing 1610. The second housing 1620 may be slidable relative to the first housing 1610. For example, the second housing 1620 may be movable relative to the first housing 1610 in a first direction d1 and/or a second direction d2 opposite to the first direction d1. As the second housing 1620 moves along the first direction d1, the second housing 1620 may slide outside the first housing 1610. As the second housing 1620 moves in the second direction d2, the second housing 1620 may slide inside the first housing 1610. A state of the electronic device 101 may be changed by the movement of the second housing 1620 relative to the first housing 1610. The state of the electronic device 101 may include a slide-in state and/or a slide-out state. In the slide-in state of the electronic device 101, the second housing 1620 may be movable in the first direction d1 among the first direction d1 and the second direction d2 with respect to the first housing 1610. For example, in the slide-in state of the electronic device 101, the second housing 1620 may be movable only in the first direction d1. In the slide-out state of the electronic device 101, the second housing 1620 may be movable in the second direction d2 among the first direction d1 and the second direction d2 with respect to the first housing 1610. For example, in the slide-out state of the electronic device 101, the second housing 1620 may be movable only in the second direction d2.

According to an embodiment, the display 1630 may be disposed on the second housing 1620. The display 1630 may be movable relative to the first housing 1610, by movement of the second housing 1620 relative to the first housing 1610. For example, the display 1630 may be moved from the inside of the first housing 1610 to the outside of the first housing 1610 by movement of the second housing 1620 in the first direction d1. For example, in the slide-out state of the electronic device 101, a size of the electronic device 101 exposed to the outside of the first housing 1610 may be maximum. For example, the display 1630 may be moved from the outside of the first housing 1610 to the inside of the first housing 1610 by movement of the second housing 1620 in the second direction d2. For example, the display 1630 may be rolled into the inside of the first housing 1610 by movement of the second housing 1620 in the second direction d2.

According to an embodiment, a first planar portion 1631 may be disposed on the second housing 1620. A shape of the first planar portion 1631 may be maintained independently of the movement of the second housing 1620 relative to the first housing 1610. The first planar portion 1631 may be unmodified by the movement of the second housing 1620 relative to the first housing 1610. The first planar portion 1631 may be exposed to the outside of the first housing 1610, independently of the movement of the second housing 1620 relative to the first housing 1610.

According to an embodiment, a second planar portion 1632 may be connected to the first planar portion 1631 by a folding portion. The second planar portion 1632 may be spaced apart from the first planar portion 1631. The second planar portion 1632 may be positioned (or accommodated) within the first housing 1610 and the second housing 1620 in the slide-in state of the electronic device 101. At least a portion of the second planar portion 1632 may be positioned (or exposed) outside the first housing 1610 and the second housing 1620 in the slide-out state of the electronic device 101.

According to an embodiment, a folding portion may be disposed between the first planar portion 1631 and the second planar portion 1632. A shape of at least a portion of the folding portion may be changed according to a change in the state of the electronic device 101. For example, at least a portion of the folding portion may be extracted out of the first housing 1610 by movement of the second housing 1620 in the first direction d1 with respect to the first housing 1610. At least a portion of the folding portion may have a shape substantially parallel to the first planar portion 1631 by being extracted out of the first housing 1610. For example, at least a portion of the folding portion may be rolled into the inside of the first housing 1610 by movement of the second housing 1610 in the second direction d2 with respect to the first housing 1610. At least a portion of the folding portion may have a curved shape with respect to the first planar portion 1631 by being rolled into the inside of the first housing 1610.

According to an embodiment, in the slide-in state of the electronic device 101, a size of the display area of the externally visible display 1630 may be minimum. For example, in the slide-in state of the electronic device 101, only the first planar portion 1631 may be exposed. A position of the second housing 1620 relative to the first housing 1610 while the state of the electronic device 101 is the slide-in state may be referred to as a reduced position. In the slide-out state of the electronic device 101, a size of the display area of the externally visible display 1630 may be maximum. For example, in the slide-out state of the electronic device 101, the first planar portion 1631, the folding portion, and at least a portion of the second planar portion 1632 may be exposed. However, it is not limited thereto. For example, in the slide-out state of the electronic device 101, the second planar portion 1632 may not be exposed to the outside of the first housing 1610. A position of the second housing 1620 relative to the first housing 1610 while the electronic device 101 is in the slide-out state may be referred to as an extended position.

For example, the at least one processor 210 (or the display driver circuitry 221) may apply a privacy filter to an execution screen displayed on at least a portion of the display area of the display 1630, while the state of the electronic device 101 is changed from the slide-in state to the slide-out state (or from the slide-out state to the slide-in state). For example, while the state of the electronic device 101 is changed from the slide-in state to the slide-out state, the display area of the display 1630 may include an extended area of the display area whose size is changed and a fixed area (or an area distinct from the extended area) of the display area whose size is maintained. As a non-limiting example, the at least one processor 210 (or the display driver circuitry 221) may apply a privacy filter to an execution screen displayed on the extended area and/or the fixed area.

The at least one processor 210 (or the display driver circuitry 221) may adjust attributes of (e.g., color, intensity, interval (or repeating period) of repeating patterns) a patterned image based on the size of the display area of the display 1630. As a non-limiting example, as the size of the display area of the display 1630 increases while the state of the electronic device 101 is changed from the slide-in state to the slide-out state, the at least one processor 210 (or the display driver circuitry 221) may increase a repeating period of the patterned image to provide a privacy protection function for the relatively increased display area. As a non-limiting example, as the size of the display area of the display 1630 increases while the state of the electronic device 101 is changed from the slide-in state to the slide-out state, the at least one processor 210 (or the display driver circuitry 221) may increase the intensity of the patterned image to provide the privacy protection function for the relatively increased display area. However, the present disclosure is not limited thereto. As a non-limiting example, as the size of the display area of the display 1630 increases while the state of the electronic device 101 is changed from the slide-in state to the slide-out state, a spacing between contents in the image displayed within the display area increase, so the at least one processor 210 (or the display driver circuitry 221) may also reduce the repeating period of the patterned image.

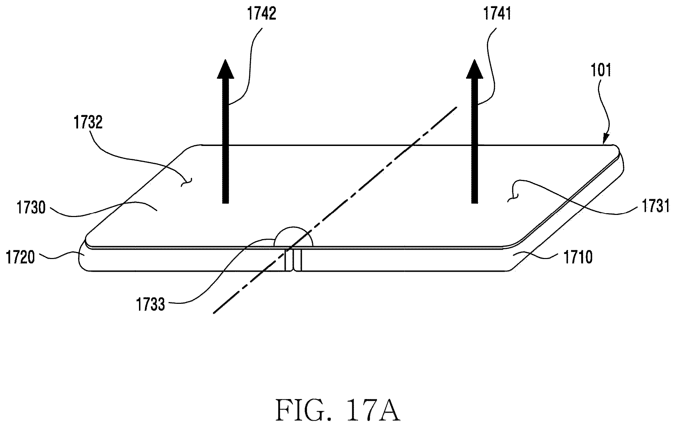

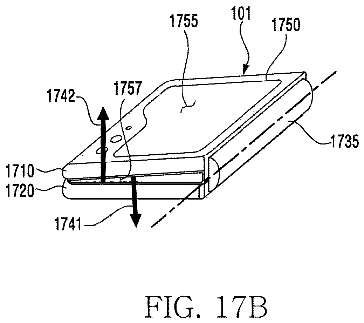

FIGS. 17A and 17B illustrate an example of an exemplary foldable electronic device.

FIG. 17A illustrates an unfolded state of an exemplary electronic device according to an embodiment. FIG. 17B illustrates a folded state of an exemplary electronic device according to an embodiment. The electronic device 101 of FIGS. 17A and 17B may be referred to as a foldable electronic device. The electronic device 101 of FIGS. 17A and 17B may be an example of the electronic device 101 of FIG. 1 or the electronic device 101 of FIG. 2. For example, a display 1730 of FIGS. 17A and 17B may include the display panel 160 of the electronic device 101.

Referring to FIGS. 17A and 17B, the electronic device 101 according to an embodiment may include a first housing 1710, a second housing 1720, and/or a folding housing 1735. For example, the first housing 1710 may be referred to as a first housing part. For example, the second housing 1720 may be referred to as a second housing part. For example, the folding housing 1735 may be referred to as a hinge structure.

According to an embodiment, the display 1730 may be disposed on the first housing 1710 and the second housing 1720 across the folding housing 1735. The display 1730 may be disposed on the first surface 1731 and the second surface 1732 across the folding housing 1735. For example, an area of the display 1730 disposed on the first surface 1731 may be referred to as a first display part or a first area. For example, an area of the display 1730 disposed on the second surface 1732 may be referred to as a second display part or a second area. For example, the display 1730 may include a bending area (or a third display part, bending part) that is bendable between the first area and the second area. For example, the bending area may indicate an area of the display 1730 corresponding to the folding housing 1735.

For example, referring to FIG. 17A, the electronic device 101 may be in an unfolded state in which the first housing 1710 and the second housing 1720 are fully folded out by a folding housing (e.g., the folding housing 1735 of FIG. 17B). According to an embodiment, the unfolded state may mean a state in which a first direction 1741 toward which the first surface 1731 of the first housing 1710 faces corresponds to a second direction 1742 toward which the second surface 1732 of the second housing 1720 faces. For example, in the unfolded state, the first direction 1741 may be substantially parallel to the second direction 1742. For example, in the unfolded state, the first direction 1741 may be identical to the second direction 1742. According to an embodiment, the first surface 1731 may form a substantially flat surface with the second surface 1732, in the unfolded state. According to an embodiment, an angle 1733 between the first surface 1731 and the second surface 1732 in the unfolded state may be approximately 180 degrees. According to an embodiment, the unfolded state may mean a state in which the entire display area of the display 1730 may be provided on a substantially flat surface. For example, in the unfolded state, the display area of the display 1730 may not include a curved surface. The unfolded state may be referred to as an outspread state or an outspreading state.

For example, referring to FIG. 17B, the electronic device 101 may provide the folded state in which the first housing 1710 and the second housing 1720 are folded in by the folding housing 1735. According to an embodiment, the folded state may mean a state in which the first direction 1741 toward which the first surface 1731 (not illustrated in FIG. 17B) faces is distinct from the second direction 1742 toward which the second surface 1732 (not illustrated in FIG. 17B) faces. For example, in the folded state, the angle between the first direction 1741 and the second direction 1742 may be substantially approximately 180 degrees, and the first direction 1741 and the second direction 1742 may be distinct from each other. For example, in the folded state, an angle 1757 between the first surface 1731 and the second surface 1732 may be substantially 0 degrees. The folded state may be referred to as a folding state. For example, the electronic device 101 may provide a folded state in which the display area (not illustrated in FIG. 17B) of the display 1730 corresponding to the first surface 1731 is substantially fully superimposed on the display area of the display 1730 (not illustrated in FIG. 17B) corresponding to the second side 1732 as the first surface 1731 and the second side 1732 face each other by the folding housing 1735. For example, the electronic device 101 may provide a folded state in which the first direction 1741 is substantially opposite to the second direction 1742. In another example, the folded state may mean a state in which the display area of the display 1730 is obscured within a field of view of a user looking at the electronic device 101. However, it is not limited thereto.

According to an embodiment, the display 1730 may be bent by a rotation provided through the folding housing 1735. For example, in the folded state, a portion of the display area of the display 1730 may be bent. For example, the portion of the display area of the display 1730 may be in a curvedly bent state to prevent damage to the display 1730 in the folded state. However, it is not limited thereto.

For example, the at least one processor 210 may identify an angle between the first direction 1741 toward which the first surface 1731 of the first housing 1710 faces and the second direction 1742 toward which the second surface 1732 of the second housing 1720 faces, via a Hall sensor within the electronic device 101, a rotation sensor within the folding housing 1735, and/or a stretch sensor within the electronic device 101.

Meanwhile, the first housing 1710 may include a display 1750, which is a cover display, on a third surface 1755 opposite to the first surface 1731. For example, the display 1750 may be used to provide visual information within the folded state in which a display area (e.g., the first area, the second area, the bending area) of the display 1730 is not visible.

For example, the at least one processor 210 (or the display driver circuitry 221) may apply a privacy filter with respect to an execution screen displayed on at least a portion of the display area of the display 1730 while the state of the electronic device 101 is changed from the folded state to the unfolded state (or from the unfolded state to the folded state). For example, while the state of the electronic device 101 is changed from the unfolded state to the folded state, the display area of the display 1730 may include the bending area of the display 1730 and the first area and the second area of the display 1730. As a non-limiting example, the at least one processor 210 (or the display driver circuitry 221) may apply a privacy filter with respect to an execution screen displayed on the bending area, the first area, and/or the second area.

The at least one processor 210 (or the display driver circuitry 221) may adjust attributes (e.g., color, intensity, interval (or repeating period) of repeating patterns) of the patterned image based on the size of the display area of the display 1730. As a non-limiting example, as the size of the display area of the display 1730 increases while the state of the electronic device 101 is changed from the folded state to the unfolded state, the at least one processor 210 (or the display driver circuitry 221) may increase the repeating period of the patterned image to provide a privacy protection function for the relatively increased display area. As a non-limiting example, as the size of the display area of the display 1730 increases while the state of the electronic device 101 is changed from the folded state to the unfolded state, the at least one processor 210 (or the display driver circuitry 221) may increase the intensity of the patterned image to provide a privacy protection function for the relatively increased display area. However, the present disclosure is not limited thereto. As a non-limiting example, a spacing between contents within the image displayed within the display area increases as the size of the display area of the display 1730 increases while the state of the electronic device 101 is changed from the folded state to the unfolded state, so the at least one processor 210 (or the display driver circuitry 221) may reduce the repeating period of the patterned image.

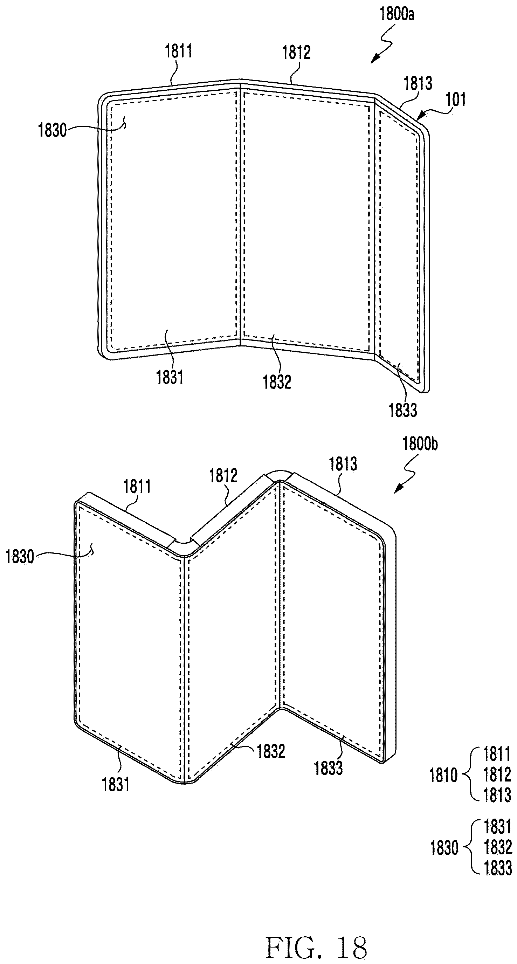

FIG. 18 illustrates an example of an exemplary multi-foldable electronic device.

Referring to FIG. 18, an electronic device 101 that is a multi-foldable electronic device of a first type 1800a, and an electronic device 101 that is a multi-foldable electronic device of a second type 1800b are illustrated. The electronic device 101 of FIG. 18 may indicate an example of the electronic device 101 of FIG. 1 or the electronic device 101 of FIG. 2. For example, a display 1830 of FIG. 18 may include the display panel 160 of the electronic device 101.

For example, the electronic device 101 of the first type 1800a may include a housing 1810 of the electronic device 101 having a G (or P) shape when viewed from a side of the electronic device 101 in a state that the display 1830 is in a folded state (or folding state). In contrast, the electronic device 101 of the second type 1800b may include a housing 1810 of the electronic device 101 having a Z shape when viewed from a side of the electronic device 101 in a state that the display 1830 is in a folded state (or folding state).

Referring to FIG. 18, the electronic device 101 may include a first housing 1811, a second housing 1812, a third housing 1813, a first hinge structure, a second hinge structure, and a display 1830. The first housing 1811 may be rotatably coupled to the second housing 1812 via the first hinge structure. For example, the first housing 1811 and the second housing 1812 may be rotated around a first folding axis through the first hinge structure disposed along the first folding axis. The third housing 1813 may be rotatably coupled to the second housing 1812 via the second hinge structure. For example, the second housing 1812) and the third housing 1813 may rotate about a second folding axis through the second hinge structure disposed along the second folding axis.

The display 1830 may form at least a portion of the exterior surface of the electronic device 101. The display 1830 may be partially disposed within the first housing 1811, the second housing 1812, and the third housing 1813. The display 1830 may define a front surface of the electronic device 101 by forming a surface of the first housing 1811, a surface of the second housing 1812, and a surface of the third housing 1813. The display 1830 may include an area in which a front camera is positioned. The area of the display 1830 may include an opening for the front camera. However, it is not limited thereto, the front camera may be disposed below an area corresponding to the area of the display 1830. The display 1830 may provide visual information to the user through the area, and the front camera may obtain an image of an external object positioned in a direction facing the front of the electronic device 101 through the area of the display 1830.

The display 1830 may include a first planar portion, a second planar portion, a third planar portion, a first deformable portion, and a second deformable portion. The first planar portion of the display 1830 may be disposed on a surface of the first housing 1811. The second planar portion of the display 1830 may be disposed on a surface of the second housing 1812. The third planar portion of the display 1830 may be disposed on a surface of the third housing 1813. The first deformable portion of the display 1830 may be positioned between the first planar portion of the display 1830 and the second planar portion of the display 1830. For example, the first deformable portion of the display 1830 may be disposed on the first hinge structure connecting the first housing 1811 and the second housing 1812. The second deformable portion of the display 1830 may be disposed between the second planar portion of the display 1830 and the third planar portion of the display 1830. For example, the second deformable portion may be disposed on the second hinge structure connecting the second housing 1812 and the third housing 1813.

For example, a first display area 1831 of the display 1830 may include at least a portion of the first deformable portion and the first planar portion. For example, a second display area 1832 of the display 1830 may include the second planar portion, at least a portion of the first deformable portion, and at least a portion of the second deformable portion. For example, a third display area 1833 of the display 1830 may include at least a portion of the second deformable portion and the third planar portion.

The first planar portion, the second planar portion, and the third planar portion of the display 1830 may maintain a planar shape regardless of a state of the electronic device 101. The first deformable portion and the second deformable portion of the display 1830 may be unfolded or be bent according to the state of the electronic device 101.

An additional display (or cover display), a first rea cover, and a second rea cover may form at least a portion of the exterior surface of the electronic device 101. The first rear cover may form another surface of the first housing 1811, the cover display may form another surface of the second housing 1812, and the second rear cover may form another surface of the third housing 1813. The cover display, the first rear cover, and the second rear cover may define a rear surface of the electronic device 101. The first rear cover may include a structure (e.g., opening) for exposing a rear camera disposed in the first housing 1811. The cover display may include an area in which another front camera is positioned. The cover display may include an opening for the front camera in the area.

For example, the at least one processor 210 (or the display driver circuitry 221) may apply a privacy filter to an execution screen displayed on at least a portion of the display area of the display 1830 while the state of the electronic device 101 is changed from the folded state to the unfolded state (or from the unfolded state to the folded state). For example, the folded state may indicate a state in which a size of the display area of the display 1830 is minimum, and the unfolded state may indicate a state in which the size of the display area of the display 1830 is maximum. As a non-limiting example, the at least one processor 210 (or the display driver circuitry 221) may apply a privacy filter to an execution screen displayed on at least a portion of the display area of the display 1830.

The at least one processor 210 (or the display driver circuitry 221) may adjust attributes (e.g., color, intensity, interval (or repeating period) of repeating patterns) of the patterned image based on the size of the display area of the display 1830. As a non-limiting example, as the size of the display area of the display 1830 increases while the state of the electronic device 101 is changed from the folded state to the unfolded state, the at least one processor 210 (or the display driver circuitry 221) may increase the repeating period of the patterned image to provide a privacy protection function for the relatively increased display area. As a non-limiting example, as the size of the display area of the display 1830 increases while the state of the electronic device 101 is changed from the folded state to the unfolded state, the at least one processor 210 (or the display driver circuitry 221) may increase the intensity of the patterned image to provide a privacy protection function for the relatively increased display area. However, the present disclosure is not limited thereto. As a non-limiting example, as the size of the display area of the display 1830 increases while the state of the electronic device 101 is changed from the folded state to the unfolded state, a spacing between contents within the image displayed within the display area increases, so the at least one processor 210 (or the display driver circuitry 221) may decrease a repeating period of the patterned image.

FIG. 19 is a schematic view of an exemplary artificial intelligence (AI) system.

Referring to FIG. 19, an AI system 1900 may include an input/output interface 1910, an artificial intelligence (AI) framework 1920, a generative AI model 1930, an application/service component 1980, and/or a knowledge repository 1990.

The input/output interface 1910 may receive an input. The input may include a user input and/or data obtained or generated by an electronic device (e.g., the electronic device 101 or the electronic device 1401 described above). The data may include an image, a video, and/or sensor data (e.g., illuminance data around the electronic device obtained from a sensor or a sensor hub (e.g., the auxiliary processor 1423), posture data (or orientation data) of the electronic device, internal temperature of the electronic device (e.g., a temperature of the display 220 or a temperature of the at least one processor 210), size information of the display area of the display 220, and/or an image obtained through an image sensor (e.g., included in the camera module 1380)of the electronic device) generated by at least one processor (e.g., the at least one processor 210 or the processor 1420) of the electronic device. The user input may include natural language, touch data obtained through touch circuitry (e.g., used to identify an input from a finger and/or stylus) included within the display panel 160, images displayed (and/or to be displayed) on the display panel 160, and/or video. As a non-limiting example, the user input may be received by the input/output interface 1910 together with context information. The context information may be described as additional information obtained in relation to the user input. The context information may be related to a state in which the user input is received (e.g., including a state of the electronic device and/or a state around the electronic device (e.g., user state)). For example, the context information may include information on one or more software applications executed within the electronic device when the user input is received. For example, the context information may include information on a position of the electronic device (or a position of a user of the electronic device), when the user input is received. For example, the user input may be integrated with the context information. For example, the user input integrated with the context information may be received by the input/output interface 1910.

The input/output interface 1910 may transmit (or provide) output. The output may include a result (or result information) generated or obtained by the AI system 1900 based at least in part on the input. The format of the output may vary. For example, the output may include natural language. For example, the output may include content (e.g., including media content and/or multimedia content). For example, the output may include an action related to the user of the electronic device. For example, the output may have a format according to a user setting of the electronic device.

The input/output interface 1910 may be described as a user query/response interface 1910.

The AI framework 1920 may be used to obtain information (or data) on the input from the input/output interface 1910 and control one or more components related to the AI system 1900 using the obtained information.

For example, a prompt design component 1921 within the AI framework 1920 may use the obtained information to generate or obtain a prompt for the generative AI model 1930 (e.g., including a large language model (LLM) or a large multimodal model (LMM)). For example, the prompt design component 1921 may be described as an AI component that uses a learning algorithm and/or a neural network to provide enhanced prompts over time. For example, the prompt design component 1921 may generate or obtain a prompt, by using the obtained information to access a knowledge component (e.g., the knowledge repository 1990) that includes user preference data, a prompt library, and/or prompt example. The generated prompt may be provided to the generative AI model 1930 (e.g., including the LLM or the LMM).

For example, an API/plugin management component 1922 within the AI framework 1920 may be used to support communication for additional information requested (or triggered) in association with the prompt provided (or to be provided) to the generative AI model 1930. For example, the API/plugin management component 1922 may be used to generate or establish a channel for communication with various data sources (e.g., the knowledge repositories 1990). For example, the API/plugin management component 1922 may support access to at least a portion of the data sources. For example, the API/plugin management component 1922 may be used to request another component (e.g., the application/service component 1980) to perform feedback (or response) in response to the prompt. As a non-limiting example, information obtained (or generated) through the API/plugin management component 1922 may be provided to the prompt design component 1921 for generating a prompt. As a non-limiting example, information obtained (or generated) through the API/plugin management component 1922 may be provided to the generative AI model 1930.

For example, an improvement component 1923 within the AI framework 1920 may at least partially tune (or adjust) (or change) a result (e.g., content) obtained (or outputted) from the generative AI model 1930. For example, the improvement component 1923 may determine or verify whether the content obtained from the generative AI model 1930 is related to the input. For example, the improvement component 1923 may determine or verify whether the content obtained from the generative AI model 1930 includes biased content. For example, the improvement component 1923 may determine or verify whether the content obtained from the generative AI model 1930 includes harmful content. For example, the improvement component 1923 may support or assist in performing additional processing to improve content obtained from the generative AI model 1930. For example, the improvement component 1923 may support providing hints to the user for improving the content.

The generative AI model 1930 may be described as an artificial intelligence neural network that generates feedback in response to a prompt. For example, the feedback may be related to the prompt or may further include additional data and/or information relative to the prompt. For example, the feedback may include new content relative to the prompt. For example, the generative AI model 1930 may include a model generating images and/or a model generating language. For example, the model generating images may include a generative adversarial network (GAN) and/or a variational auto encoder (VAE). For example, the model generating images may include a diffusion-based generative model (e.g., transformer VAE). For example, the model generating language may include CHAT-GPT 3 and/or CHAT-GPT 4. For example, the generative AI model 1930 may include the LMM that generates the feedback by recognizing text, images, and/or speech.

As a non-limiting example, the AI framework 1920 and/or the generative AI model 1930 may be included within an AI module (e.g., including processing circuitry) within the electronic device. For example, the AI module may be operably coupled with at least one processor (e.g., at least one processor 210 or processor 1320) of the electronic device. For example, the AI module may be operably coupled with display driver circuitry (e.g., the display driver circuitry 221 or DDI 1430) of the electronic device. For example, the AI module may be operably coupled with a sensor hub of the electronic device for one or more sensors within the electronic device.

The present disclosure may reduce visibility of contents of an image to a person (e.g., third party) distinct from a user of an electronic device by displaying a patterned image superimposed on the image. In addition, the present disclosure may generate a patterned image so that, when displaying the patterned image superimposed on the image, the patterned image appears relatively blurry to a user of an electronic device positioned relatively closely. Accordingly, the present disclosure may maintain (or relatively less deteriorate) the visibility of the image to the user. Accordingly, the present disclosure may effectively protect the privacy of the user while maintaining the visibility of the image to the user.

The effects that can be obtained from the present disclosure are not limited to those described above, and any other effects not mentioned herein will be clearly understood by those having ordinary knowledge in the art to which the present disclosure belongs, from the following description.

As described above, an electronic device 101 may comprise at least one processor 210 including processing circuitry. The electronic device 101 may comprise memory 230, comprising one or more storage media, storing one or more programs configured to be executed by the at least one processor 210 individually and/or collectively. The electronic device 101 may comprise a display 220. The one or more programs may include instructions that cause the electronic device 101 to generate an image to be displayed through the display 220. The one or more programs may include instructions that cause the electronic device 101 to concurrently display, through the display 220, the image and a patterned image, superimposed on the image, for a privacy display mode. The patterned image may be translucent for allowing the image being viewable through the patterned image. The patterned image may include first portions each having a first grayscale range including a first grayscale level, and second portions each having a second grayscale range including a second grayscale level. The first portions and the second portions may alternate with each other. A first contrast between the first portions and the second portions of the patterned image when viewed from a position spaced apart from the display 220 by a first distance may be visually highlighted relative to a second contrast between the first portions and the second portions of the patterned image when viewed from a position spaced apart from the display 220 by a second distance shorter than the first distance.

According to an embodiment, the first grayscale range may be different from the second grayscale range. The first grayscale range may include the first grayscale level and a third grayscale level. The first grayscale level may be a maximum grayscale level of the first grayscale range. The third grayscale level may be a minimum grayscale level of the first grayscale range. The second grayscale range may include the second grayscale level and a fourth grayscale level. The second grayscale level may be a minimum grayscale level of the second grayscale range. The fourth grayscale level may be a maximum grayscale level of the second grayscale range.

According to an embodiment, the patterned image may include third portions surrounding the first portions and the second portions. The first grayscale range of each of the first portions may include grayscale levels being gradually changed from the first grayscale level to the third grayscale level. The second grayscale range of each of the second portions may include grayscale levels being gradually changed from the second grayscale level to the fourth grayscale level. A third grayscale range of each of the third portions may include grayscale levels being gradually changed from the third grayscale level to the fourth grayscale level. This may cause the pattern image to be more visible to a third party thereby blocking the image.

According to an embodiment, the patterned image may be defined by first rows and second rows that alternate with each other, and first columns and second columns that alternate with each other. Each of the first rows may include the first portions and the third portions. Each of the second rows may include the third portions and the second portions. Each of the first columns may include the first portions and the third portions. Each of the second columns may include the third portions and the second portions.

According to an embodiment, a first portion from among the first portions may be positioned on a position defined by a first row from among the first rows and a first column from among the first columns. A third portion from among the third portions may be positioned on a position defined by the first row from among the first rows and a second column from among the second columns. Another third portion from among the third portions may be positioned on a position defined by a second row from among the second rows and the first column from among the first columns. A second portion from among the second portions may be positioned on a position defined by the second row from among the second rows and the second column from among the second columns. The symmetry of the patterned image further blocks the view of the image for the third party.

According to an embodiment, the patterned image may have a checkmate-shape defined by the first portions, the second portions, and the third portions.

According to an embodiment, the one or more programs may include instructions that cause the electronic device 101 to identify an event for the privacy display mode. The one or more programs may include instructions that cause the electronic device 101 to, based on the event, generate the image to be displayed through the display 220. The one or more programs may include instructions that cause the electronic device 101 to, based on the event, generate the patterned image to be superimposed on the image. The one or more programs may include instructions that cause the electronic device 101 to, based on the event, perform blending of the image and the patterned image. The one or more programs may include instructions that cause the electronic device 101 to, based on the event, based on performing the blending, concurrently display, through the display 220, the image and the patterned image.

According to an embodiment, the one or more programs may include instructions that cause the electronic device 101 to identify representative color of the image. According to an embodiment, the one or more programs may include instructions that cause the electronic device 101 to generate the patterned image based on applying the representative color to the first portions of the patterned image and applying complementary color of the representative color to the second portions of the patterned image. By applying colors this way, the view of the image is further blocked for a third party.

According to an embodiment, the one or more programs include instructions that cause the electronic device 101 to identify contents in the image. The one or more programs include instructions that cause the electronic device 101 to determine whether the contents in the image satisfy criteria. The one or more programs include instructions that cause the electronic device 101 to, in accordance with a determination that the contents satisfy the criteria, identify a weight, for the blending, of the patterned image with respect to the image as a first value. The one or more programs include instructions that cause the electronic device 101 to, in accordance with a determination that the contents do not satisfy the criteria, identify the weight, for the blending, of the patterned image with respect to the image as a second value less than the first value. The one or more programs include instructions that cause the electronic device 101 to, based on the identified weight, perform the blending of the image and the patterned image.

According to an embodiment, the one or more programs may include instructions that cause the electronic device 101 to provide, to a trained model executed on the electronic device 101, the image. The one or more programs may include instructions that cause the electronic device 101 to obtain, from the trained model, the contents in the image and the weight according to the contents. The one or more programs may include instructions that cause the electronic device 101 to, based on the identified weight, perform the blending of the image and the patterned image.

According to an embodiment, the one or more programs include instructions that cause the electronic device 101 to identify contents in the image. The one or more programs include instructions that cause the electronic device 101 to determine whether the contents in the image satisfy criteria. The one or more programs include instructions that cause the electronic device 101 to, in accordance with a determination that the contents satisfy the criteria, identify a contrast ratio between the first grayscale level of each of the first portions and the second grayscale level of each of the second portions as a first ratio. The one or more programs include instructions that cause the electronic device 101 to, in accordance with a determination that the contents do not satisfy the criteria, identify the contrast ratio between the first grayscale level of each of the first portions and the second grayscale level of each of the second portions as a second ratio less than the first ratio. The one or more programs include instructions that cause the electronic device 101 to, based on the identified contrast ratio, generate the patterned image to be superimposed on the image.

According to an embodiment, the one or more programs may include instructions that cause the electronic device 101 to provide, to a trained model executed on the electronic device 101, the image. The one or more programs may include instructions that cause the electronic device 101 to obtain, from the trained model, the contents in the image.

According to an embodiment, the one or more programs may include instructions that cause the electronic device 101 to identify texts in the image. The one or more programs may include instructions that cause the electronic device 101 to identify a font size of the texts. The one or more programs may include instructions that cause the electronic device 101 to, in accordance with the font size having a first size, identify a spacing between each of the first portions and each of the second portions of the patterned image as a first spacing. The one or more programs may include instructions that cause the electronic device 101 to, in accordance with the font size having a second size bigger than the first size, identify the spacing between each of the first portions and each of the second portions of the patterned image as a second spacing longer than the first spacing. The one or more programs may include instructions that cause the electronic device 101 to, based on the identified spacing, generate the patterned image to be superimposed on the image. Adapting the patterned image to the displayed text can more easily obscure the readability of the text for a third party.

According to an embodiment, the electronic device 101 may comprises at least one sensor. The one or more programs may include instructions that cause the electronic device 101 to obtain sensing data through the at least one sensor. The one or more programs may include instructions that cause the electronic device 101 to, based on the sensing data, identify a position of a user of the electronic device 101 as a position spaced apart from the display 220 by the second distance, and identify a position of a third party different from the user of the electronic device 101 as a position spaced apart from the display 220 by the first distance. The one or more programs may include instructions that cause the electronic device 101 to, based on the position of the user and the position of the third party, generate the patterned image to be superimposed on the image.

According to an embodiment, the event for the privacy display mode may comprise receiving an input for changing a display mode of the display 220 from a normal display mode to the privacy display mode.

According to an embodiment, the first distance may be shorter than a reference distance. The reference distance defines a point at which a contrast sensitivity may begin to decrease with a spatial frequency.

According to an embodiment, the display 220 may include display driver circuitry 221. The one or more programs include instructions that cause the electronic device 101 to identify an event for the privacy display mode. The one or more programs include instructions that cause the electronic device 101 to, based on the event, generate the image to be displayed through the display 220, and transmit, to the display driver circuitry 221, the generated image. The display driver circuitry 221 may be configured to, based on receiving the image, generate the patterned image superimposed on the image. The display driver circuitry 221 may be configured to perform blending the image and the patterned image. The display driver circuitry 221 may be configured to, based on performing the blending, concurrently display, through the display 220, the image and the patterned image.

As described above, a method performed by an electronic device 101 with a display 220 may comprise generating an image to be displayed through the display 220. The method may comprise concurrently displaying, through the display 220, the image and a patterned image, superimposed on the image, for a privacy display mode. The patterned image may be translucent for allowing the image being viewable through the patterned image. The patterned image may include first portions each having a first grayscale range including a first grayscale level, and second portions each having a second grayscale range including a second grayscale level. The first portions and the second portions may alternate with each other. A first contrast between the first portions and the second portions of the patterned image when viewed from a position spaced apart from the display 220 by a first distance may be visually highlighted relative to a second contrast between the first portions and the second portions of the patterned image when viewed from a position spaced apart from the display 220 by a second distance shorter than the first distance.

According to an embodiment, the first grayscale range may be different from the second grayscale range. The first grayscale range may include the first grayscale level and a third grayscale. The first grayscale level may be a maximum grayscale level of the first grayscale range. The third grayscale level may be a minimum grayscale level of the first grayscale range. The second grayscale range may include the second grayscale level and a fourth grayscale level. The second grayscale level may be a minimum grayscale level of the second grayscale range. The fourth grayscale level may be a maximum grayscale level of the second grayscale range.

As described above, a non-transitory computer readable storage medium, when individually and/or collectively executed by at least one processor 210 of an electronic device 101 with a display 220, may store one or more programs including instructions that cause the electronic device 101 to generate an image to be displayed through the display 220. The non-transitory computer readable storage medium, when individually and/or collectively executed by the at least one processor 210, may store one or more programs including instructions that cause the electronic device 101 to concurrently display, through the display 220, the image and a patterned image, superimposed on the image, for a privacy display mode. The patterned image may be translucent for allowing the image being viewable through the patterned image. The patterned image may include first portions each having a first grayscale range including a first grayscale level, and second portions each having a second grayscale range including a second grayscale level. The first portions and the second portions may alternate with each other. A first contrast between the first portions and the second portions of the patterned image when viewed from a position spaced apart from the display 220 by a first distance may be visually highlighted relative to a second contrast between the first portions and the second portions of the patterned image when viewed from a position spaced apart from the display 220 by a second distance shorter than the first distance.

The technical problems to be achieved in this document are not limited to those described above, and other technical problems not mentioned herein will be clearly understood by those having ordinary knowledge in the art to which the present disclosure belongs, from the following description.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1440) including one or more instructions that are stored in a storage medium (e.g., internal memory 1436 or external memory 1438) that is readable by a machine (e.g., the electronic device 1401). For example, a processor (e.g., the processor 1420) of the machine (e.g., the electronic device 1401) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
at least one processor including processing circuitry;
memory, comprising one or more storage media, storing one or more programs configured to be executed by the at least one processor individually and/or collectively; and
a display,
wherein the one or more programs include instructions that cause the electronic device to:
generate an image to be displayed through the display; and
concurrently display, through the display, the image and a patterned image, superimposed on the image, for a privacy display mode,
wherein the patterned image is translucent for allowing the image being viewable through the patterned image,
wherein the patterned image includes:
first portions each having a first grayscale range including a first grayscale level, and
second portions each having a second grayscale range including a second grayscale level, wherein the first portions and the second portions alternate with each other, and
wherein a first contrast between the first portions and the second portions of the patterned image when viewed from a position spaced apart from the display by a first distance is visually highlighted relative to a second contrast between the first portions and the second portions of the patterned image when viewed from a position spaced apart from the display by a second distance shorter than the first distance.

2. The electronic device of claim 1,
wherein the first grayscale range is different from the second grayscale range,
wherein the first grayscale range includes the first grayscale level and a third grayscale level lower than the first grayscale level, wherein the first grayscale level is a maximum grayscale level of the first grayscale range, wherein the third grayscale level is a minimum grayscale level of the first grayscale range, and
wherein the second grayscale range includes the second grayscale level and a fourth grayscale level higher than the second grayscale level and lower than the third grayscale level, wherein the second grayscale level is a minimum grayscale level of the second grayscale range, wherein the fourth grayscale level is a maximum grayscale level of the second grayscale range.

3. The electronic device of claim 2,
wherein the patterned image includes third portions surrounding the first portions and the second portions,
wherein the first grayscale range of each of the first portions includes grayscale levels being gradually changed from the first grayscale level to the third grayscale level,
wherein the second grayscale range of each of the second portions includes grayscale levels being gradually changed from the second grayscale level to the fourth grayscale level, and
wherein a third grayscale range of each of the third portions includes grayscale levels being gradually changed from the third grayscale level to the fourth grayscale level.

4. The electronic device of claim 3,
wherein the patterned image is defined by first rows and second rows that alternate with each other, and is defined by first columns and second columns that alternate with each other,
wherein each of the first rows includes the first portions and the third portions,
wherein each of the second rows includes the third portions and the second portions,
wherein each of the first columns includes the first portions and the third portions, and
wherein each of the second columns includes the third portions and the second portions.

5. The electronic device of claim 4,
wherein a first portion from among the first portions is positioned on a position defined by a first row from among the first rows and a first column from among the first columns,
wherein a third portion from among the third portions is positioned on a position defined by the first row from among the first rows and a second column from among the second columns,
wherein another third portion from among the third portions is positioned on a position defined by a second row from among the second rows and the first column from among the first columns, and
wherein a second portion from among the second portions is positioned on a position defined by the second row from among the second rows and the second column from among the second columns.

6. The electronic device of any one of preceding claims,
wherein the one or more programs include instructions that cause the electronic device to:
identify an event for the privacy display mode;
based on the event:
generate the image to be displayed through the display;
generate the patterned image to be superimposed on the image;
perform blending of the image and the patterned image; and
based on performing the blending, concurrently display, through the display, the image and the patterned image.

7. The electronic device of claim 6,
wherein the one or more programs include instructions that cause the electronic device to:
identify representative color of the image; and
generate the patterned image based on applying the representative color to the first portions of the patterned image and applying complementary color of the representative color to the second portions of the patterned image.

8. The electronic device of any one of claims 6 or 7,
wherein the one or more programs include instructions that cause the electronic device to:
identify contents in the image;
determine whether the contents in the image satisfy criteria;
in accordance with a determination that the contents satisfy the criteria, identify a weight, for the blending, of the patterned image with respect to the image as a first value;
in accordance with a determination that the contents do not satisfy the criteria, identify the weight, for the blending, of the patterned image with respect to the image as a second value less than the first value; and
based on the identified weight, perform the blending of the image and the patterned image.

9. The electronic device of any one of claims 6 or 7,
wherein the one or more programs include instructions that cause the electronic device to:
identify contents in the image;
determine whether the contents in the image satisfy criteria;
in accordance with a determination that the contents satisfy the criteria, identify a contrast ratio between the first grayscale level of each of the first portions and the second grayscale level of each of the second portions as a first ratio;
in accordance with a determination that the contents do not satisfy the criteria, identify the contrast ratio between the first grayscale level of each of the first portions and the second grayscale level of each of the second portions as a second ratio less than the first ratio; and
based on the identified contrast ratio, generate the patterned image to be superimposed on the image.

10. The electronic device of any one of claims 6 to 9,
wherein the one or more programs include instructions that cause the electronic device to:
identify texts in the image;
identify a font size of the texts;
in accordance with the font size having a first size, identify a spacing between each of the first portions and each of the second portions of the patterned image as a first spacing;
in accordance with the font size having a second size bigger than the first size, identify the spacing between each of the first portions and each of the second portions of the patterned image as a second spacing longer than the first spacing; and
based on the identified spacing, generate the patterned image to be superimposed on the image.

11. The electronic device of any one of claims 6 to 10,
wherein the electronic device comprises at least one sensor,
wherein the one or more programs include instructions that cause the electronic device to:
obtain sensing data through the at least one sensor;
based on the sensing data:
identify a position of a user of the electronic device as a position spaced apart from the display by the second distance, and
identify a position of a third party different from the user of the electronic device as a position spaced apart from the display by the first distance; and
based on the position of the user and the position of the third party, generate the patterned image to be superimposed on the image.

12. The electronic device of any one of the preceding claims,
wherein the first distance is shorter than a reference distance, and
wherein the reference distance defines a point at which a contrast sensitivity begins to decrease with a spatial frequency.

13. A method performed by an electronic device with a display comprising:
generating an image to be displayed through the display; and
concurrently displaying, through the display, the image and a patterned image, superimposed on the image, for a privacy display mode,
wherein the patterned image is translucent for allowing the image being viewable through the patterned image,
wherein the patterned image includes:
first portions each having a first grayscale range including a first grayscale level, and
second portions each having a second grayscale range including a second grayscale level, wherein the first portions and the second portions alternate with each other, and
wherein a first contrast between the first portions and the second portions of the patterned image when viewed from a position spaced apart from the display by a first distance is visually highlighted relative to a second contrast between the first portions and the second portions of the patterned image when viewed from a position spaced apart from the display by a second distance shorter than the first distance.

14. The method of claim 13,
wherein the first grayscale range is different from the second grayscale range,
wherein the first grayscale range includes the first grayscale level and a third grayscale level lower than the first grayscale level, wherein the first grayscale level is a maximum grayscale level of the first grayscale range, wherein the third grayscale level is a minimum grayscale level of the first grayscale range, and
wherein the second grayscale range includes the second grayscale level and a fourth grayscale level higher than the second grayscale level and lower than the third grayscale level, wherein the second grayscale level is a minimum grayscale level of the second grayscale range, wherein the fourth grayscale level is a maximum grayscale level of the second grayscale range.

15. A non-transitory computer readable storage medium, when individually and/or collectively executed by at least one processor of an electronic device with a display, storing one or more programs including instructions that cause the electronic device to perform the method of any one of claims 13 or 14.
